(19) Europäisches Patentamt / European Patent Office / Office européen des brevets

(11) **EP 4 287 297 A1**

(12) **EUROPEAN PATENT APPLICATION**
published in accordance with Art. 153(4) EPC

(43) Date of publication:
06.12.2023 Bulletin 2023/49

(21) Application number: 22745986.4

(22) Date of filing: 27.01.2022

(51) International Patent Classification (IPC):
*H01M 4/13* (2010.01)          *H01M 4/62* (2006.01)
*H01M 10/05* (2010.01)          *H01M 50/42* (2021.01)
*H01M 50/449* (2021.01)          *H01M 50/46* (2021.01)

(52) Cooperative Patent Classification (CPC):
**H01M 4/13; H01M 4/62; H01M 10/05; H01M 50/42;
H01M 50/449; H01M 50/46;** Y02E 60/10

(86) International application number:
**PCT/JP2022/003135**

(87) International publication number:
**WO 2022/163767 (04.08.2022 Gazette 2022/31)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: 29.01.2021   JP 2021013981

(71) Applicant: **Zeon Corporation**
**Tokyo 100-8246 (JP)**

(72) Inventor: **ASAI Kazuki**
**Tokyo 100-8246 (JP)**

(74) Representative: **Maiwald GmbH**
**Elisenhof**
**Elisenstraße 3**
**80335 München (DE)**

(54) **NONAQUEOUS SECONDARY BATTERY**

(57)   A non-aqueous secondary battery includes a positive electrode, a negative electrode, an electrolyte solution, and a separator. The positive electrode includes a current collector and a positive electrode mixed material layer formed on the current collector. The positive electrode mixed material layer contains a positive electrode active material, a conductive material, and a polymer A. The polymer A includes a nitrile group-containing monomer unit and either or both of a conjugated diene monomer unit and an alkylene structural unit. The content of the polymer A in the positive electrode mixed material layer is not less than 0.01 mass% and not more than 8 mass%. The separator includes a separator substrate and an adhesive layer formed on the separator substrate. The adhesive layer contains a polymer B and has a ratio of coverage by the polymer B of not less than 3% and not more than 70%.

EP 4 287 297 A1

**Description**

TECHNICAL FIELD

The present disclosure relates to a non-aqueous secondary battery.

BACKGROUND

Non-aqueous secondary batteries such as lithium ion secondary batteries have characteristics such as compact size, light weight, high energy-density, and the ability to be repeatedly charged and discharged, and are used in a wide range of applications. A non-aqueous secondary battery generally includes battery members such as electrodes (positive electrode and negative electrode) and a separator that isolates the positive electrode and the negative electrode from each other and prevents short-circuiting between the positive and negative electrodes.

Note that a battery member of a non-aqueous secondary battery may be a member that includes a functional layer containing a binder and also optionally containing particles that are compounded so as to cause the battery member to display a desired function (hereinafter, referred to as "functional particles").

More specifically, a separator that includes an adhesive layer containing a binder and/or a porous membrane layer containing a binder and non-conductive particles as functional particles on a separator substrate may be used as a separator of a non-aqueous secondary battery. Moreover, an electrode that includes an electrode mixed material layer containing a binder and electrode active material particles as functional particles on a current collector or an electrode that further includes an adhesive layer and/or a porous membrane layer such as described above on an electrode substrate including an electrode mixed material layer on a current collector may be used as an electrode of a non-aqueous secondary battery.

For example, Patent Literature (PTL) 1 and 2 disclose a lithium ion secondary battery in which a separator that includes an adhesive layer containing a particulate polymer having a core-shell structure as a binder on a substrate is used and in which a positive electrode that includes a positive electrode mixed material layer containing a polymer such as polyvinylidene fluoride (PVDF) as a binder and also containing positive electrode active material particles as functional particles on a current collector is used.

CITATION LIST

Patent Literature

    PTL 1: WO2019/131348A1
    PTL 2: WO2017/094252A1

SUMMARY

(Technical Problem)

In recent years, there has been demand for even higher performance in non-aqueous secondary batteries. From a viewpoint of improving battery characteristics such as rate characteristics and cycle characteristics, it is desirable for a non-aqueous secondary battery to have excellent mobility of electrolyte solution inside a cell (hereinafter, also referred to simply as "electrolyte solution mobility").

However, there is room for improvement of electrolyte solution mobility in a non-aqueous secondary battery in which a battery member such as a separator or positive electrode according to the conventional technique described above is used.

Moreover, it is desirable for a separator to have high heat shrinkage resistance in a state in which the separator is immersed in electrolyte solution in a non-aqueous secondary battery (i.e., in electrolyte solution) from a viewpoint of safety.

However, there is room for improvement of heat shrinkage resistance of a separator in a non-aqueous secondary battery in which a battery member such as a separator or positive electrode according to the conventional technique described above is used.

Accordingly, an object of the present disclosure is to provide a non-aqueous secondary battery having excellent electrolyte solution mobility and separator heat shrinkage resistance.

(Solution to Problem)

The inventor conducted diligent investigation with the aim of solving the problem set forth above. The inventor discovered that in the case of a non-aqueous secondary battery that includes a positive electrode, a negative electrode, an electrolyte solution, and a separator, electrolyte solution mobility of the non-aqueous secondary battery and heat shrinkage resistance of the separator can be improved by using a positive electrode that includes a positive electrode mixed material layer containing a positive electrode active material, a conductive material, and a specific polymer and by using a separator that includes an adhesive layer containing a polymer and having a ratio of coverage by the polymer that is within a specific range. In this manner, the inventor completed the present disclosure.

Specifically, the present disclosure aims to advantageously solve the problem set forth above, and a presently disclosed non-aqueous secondary battery comprises a positive electrode, a negative electrode, an electrolyte solution, and a separator, wherein the positive electrode includes a current collector and a positive electrode mixed material layer formed on the current collector, the positive electrode mixed material layer contains a positive electrode active material, a conductive material, and a polymer A, the polymer A includes a nitrile group-containing monomer unit and either or both of a conjugated diene monomer unit and an alkylene structural unit, content of the polymer A in the positive electrode mixed material layer is not less than 0.01 mass% and not more than 8 mass%, the separator includes a separator substrate and an adhesive layer formed on the separator substrate, the adhesive layer contains a polymer B, and the adhesive layer has a ratio of coverage by the polymer B of not less than 3% and not more than 70%. In the case of a non-aqueous secondary battery that includes at least a positive electrode including a positive electrode mixed material layer containing a positive electrode active material, a conductive material, and a specific polymer and a separator including an adhesive layer containing a polymer and having a ratio of coverage by the polymer that is within a specific range in this manner, this non-aqueous secondary battery has excellent electrolyte solution mobility and separator heat shrinkage resistance.

Note that when a polymer is said to "include a monomer unit" in the present disclosure, this means that "a polymer obtained using that monomer includes a repeating unit derived from the monomer". Moreover, in the present specification, in the case of a polymer that is produced through copolymerization of a plurality of types of monomers, the "proportional content of a monomer unit" that is formed through polymerization of a given monomer is normally, unless otherwise specified, the same as the ratio (charging ratio) of the given monomer among all monomers used in polymerization of the polymer. Furthermore, the "proportional content" of each "monomer unit" in a polymer can be measured by a nuclear magnetic resonance (NMR) method such as $^1$H-NMR or $^{13}$C-NMR.

Also, the ratio of coverage of the adhesive layer by the polymer B referred to in the present disclosure can be measured by a method described in the EXAMPLES section of the present specification.

Moreover, the "heat shrinkage resistance of a separator" referred to in the present specification is the heat shrinkage resistance of the separator in a state in which the separator is immersed in electrolyte solution inside a non-aqueous secondary battery (i.e., in electrolyte solution).

In the presently disclosed non-aqueous secondary battery, proportional content of the nitrile group-containing monomer unit in the polymer A is preferably not less than 10 mass% and not more than 50 mass%. When the proportional content of the nitrile group-containing monomer unit in the polymer A is within the specific range set forth above, rate characteristics and cycle characteristics of the non-aqueous secondary battery can be improved.

In the presently disclosed non-aqueous secondary battery, the positive electrode mixed material layer preferably has a void fraction of not less than 15% and not more than 50%. When the void fraction of the positive electrode mixed material layer is within the specific range set forth above, electrolyte solution mobility of the non-aqueous secondary battery can be further improved while also ensuring sufficiently high energy density of the non-aqueous secondary battery.

Note that the void fraction of a positive electrode mixed material layer referred to in the present disclosure can be measured by a method described in the EXAMPLES section of the present specification.

In the presently disclosed non-aqueous secondary battery, the polymer B preferably includes not less than 0.1 mass% and not more than 50 mass%, in total, of one or more polar group-containing monomer units selected from the group consisting of an acid group-containing monomer unit, a hydroxyl group-containing monomer unit, an epoxy group-containing monomer unit, an amide group-containing monomer unit, and a nitrile group-containing monomer unit. When the total proportional content of the specific polar group-containing monomer units set forth above in the polymer B is within the specific range set forth above, electrolyte solution mobility of the non-aqueous secondary battery and heat shrinkage resistance of the separator can be further improved.

In the presently disclosed non-aqueous secondary battery, when total proportional content of the polar group-containing monomer units in the polymer B is denoted as X and proportional content of the nitrile group-containing monomer unit in the polymer A is denoted as Y, a ratio X/Y of X and Y is preferably not less than 0.05 and not more than 1.2. When a ratio X/Y of the total proportional content X of the specific polar group-containing monomer units in the polymer B and the proportional content Y of the nitrile group-containing monomer unit in the polymer A is within the specific range set forth above, electrolyte solution mobility of the non-aqueous secondary battery and heat shrinkage resistance of the separator can be further improved.

In the presently disclosed non-aqueous secondary battery, the polymer B preferably includes not less than 5 mass% and not more than 80 mass% of a (meth)acrylic acid ester monomer unit. When the proportional content of a (meth)acrylic acid ester monomer unit in the polymer B is within the specific range set forth above, sufficiently high electrolyte solution mobility of the non-aqueous secondary battery and heat shrinkage resistance of the separator can be ensured while also improving cycle characteristics of the non-aqueous secondary battery.

Note that in the present disclosure, "(meth)acryl" is used to indicate "acryl" and/or "methacryl".

In the presently disclosed non-aqueous secondary battery, the polymer B may include a polymer that includes a fluorine-containing monomer unit.

In the presently disclosed non-aqueous secondary battery, total proportional content of a structural unit derived from a conjugated diene monomer polymerized by 1,2-bonding and a structural unit derived from a conjugated diene monomer polymerized by 3,4-bonding in the polymer A is preferably 30 mass% or less. When the total proportional content of a structural unit derived from a conjugated diene monomer polymerized by 1,2-bonding and a structural unit derived from a conjugated diene monomer polymerized by 3,4-bonding in the polymer A is not more than the specific value set forth above, rate characteristics of the non-aqueous secondary battery can be improved.

Note that the total proportional content of a structural unit derived from a conjugated diene monomer polymerized by 1,2-bonding and a structural unit derived from a conjugated diene monomer polymerized by 3,4-bonding in the polymer A can be measured by a method described in the EXAMPLES section of the present specification.

In the presently disclosed non-aqueous secondary battery, the positive electrode mixed material layer and the adhesive layer are preferably in contact. When the positive electrode mixed material layer and the adhesive layer are in contact inside of the presently disclosed non-aqueous secondary battery, electrolyte solution mobility of the non-aqueous secondary battery can be further improved.

(Advantageous Effect)

According to the present disclosure, it is possible to provide a non-aqueous secondary battery having excellent electrolyte solution mobility and separator heat shrinkage resistance.

DETAILED DESCRIPTION

The following provides a detailed description of embodiments of the present disclosure.

(Non-aqueous secondary battery)

The presently disclosed non-aqueous secondary battery includes a positive electrode, a negative electrode, an electrolyte solution, and a separator. The positive electrode includes a current collector and a positive electrode mixed material layer formed on the current collector, wherein the positive electrode mixed material layer contains a positive electrode active material, a conductive material, and a specific polymer A. The content of the polymer A in the positive electrode mixed material layer is within a specific range. The separator includes a separator substrate and an adhesive layer formed on the separator substrate, wherein the adhesive layer contains a polymer B. The adhesive layer has a ratio of coverage by the polymer B that is within a specific range.

The presently disclosed non-aqueous secondary battery has excellent electrolyte solution mobility as a result of including a positive electrode that includes the above-described positive electrode mixed material layer and a separator that includes the above-described adhesive layer. In particular, the presently disclosed non-aqueous secondary battery can display excellent electrolyte solution mobility even in a case in which densification of electrode mixed material layers (positive electrode mixed material layer and negative electrode mixed material layer) is performed with the aim of increasing capacity, for example. Moreover, the presently disclosed non-aqueous secondary battery can display excellent cycle characteristics and rate characteristics (for example, low-temperature rate characteristics) as a result of having excellent electrolyte solution mobility. Furthermore, the presently disclosed non-aqueous secondary battery has good adhesion between a separator and another battery member such as a positive electrode, for example, as a result of including a separator that includes the above-described adhesive layer. Through good adhesion between the separator and another battery member, it is possible to improve heat shrinkage resistance of the separator inside of the non-aqueous secondary battery and also to increase electrolyte solution mobility of the non-aqueous secondary battery.

Battery members such as the positive electrode, the negative electrode, and the separator that are included in the presently disclosed non-aqueous secondary battery are normally arranged such that the positive electrode is located at one surface side of the separator and the negative electrode is located at the other surface side of the separator. More specifically, the battery members may be arranged such that one surface side of the separator and a positive electrode mixed material layer-side of the positive electrode face each other and such that the other surface side of the separator and a negative electrode mixed material layer-side of the negative electrode face each other, for example.

Although the following describes, as one example, a case in which the non-aqueous secondary battery is a lithium ion secondary battery, the presently disclosed non-aqueous secondary battery is not limited to the following example.

<Positive electrode>

The positive electrode that is included in the presently disclosed non-aqueous secondary battery includes a current collector and a positive electrode mixed material layer formed on the current collector.

<<Current collector>>

The current collector is a material having electrical conductivity and electrochemical durability. Specifically, the current collector may, for example, be made of a metal material such as iron, copper, aluminum, nickel, stainless steel, titanium, tantalum, gold, or platinum. One of these materials may be used individually, or two or more of these materials may be used in combination in a freely selected ratio. Of these materials, a thin film formed of aluminum (aluminum foil) is preferable as the current collector used in production of the positive electrode.

<<Positive electrode mixed material layer>>

The positive electrode mixed material layer that is formed on the current collector contains a positive electrode active material, a conductive material, and a specific polymer A. The content of the polymer A in the positive electrode mixed material layer is within a specific range. Note that the positive electrode mixed material layer may optionally further contain components other than the positive electrode active material, the conductive material, and the polymer A (i.e., other components).

{Positive electrode active material}

The positive electrode active material may be a known positive electrode active material such as lithium-containing cobalt oxide ($LiCoO_2$), lithium manganate ($LiMn_2O_4$), lithium-containing nickel oxide ($LiNiO_2$), a lithium-containing complex oxide of Co-Ni-Mn ($Li(Co\ Mn\ Ni)O_2$), a lithium-containing complex oxide of Ni-Mn-Al, a lithium-containing complex oxide of Ni-Co-Al, olivine-type lithium iron phosphate ($LiFePO_4$), olivine-type lithium manganese phosphate ($LiMnPO_4$), a $Li_2MnO_3$-$LiNiO_2$-based solid solution, a lithium-rich spinel compound represented by $Li_{1+x}Mn_{2-x}O_4$ ($0 < x < 2$), $Li[Ni_{0.17}Li_{0.2}Co_{0.07}Mn_{0.56}]O_2$, or $LiNi_{0.5}Mn_{1.5}O_4$ without any specific limitations.

The particle diameter of the positive electrode active material is not specifically limited and may be the same as that of a conventionally used positive electrode active material.

-Content in positive electrode mixed material layer-

The content of the positive electrode active material in the positive electrode mixed material layer is not specifically limited so long as it is within a range that yields the desired effects according to the present disclosure, but is preferably 82 mass% or more, more preferably 88 mass% or more, and even more preferably 92 mass% or more, and is preferably 99 mass% or less. When the content of the positive electrode active material in the positive electrode mixed material layer is not less than any of the lower limits set forth above, energy density of the non-aqueous secondary battery can be improved. On the other hand, when the content of the positive electrode active material in the positive electrode mixed material layer is not more than the upper limit set forth above, sufficiently good rate characteristics of the non-aqueous secondary battery can be ensured because the subsequently described conductive material, polymer A, and so forth can be sufficiently contained in the positive electrode mixed material layer.

{Conductive material}

The conductive material may be a conductive carbon such as acetylene black, Ketjenblack, carbon black, graphite, vapor-grown carbon fiber, or carbon nanotubes; carbon powder such as graphite; fiber or foil of any of various metals; or the like, for example. Of these examples, acetylene black and carbon nanotubes are preferable as the conductive material, and carbon nanotubes are more preferable as the conductive material. Note that the carbon nanotubes may be single-walled carbon nanotubes or multi-walled carbon nanotubes.

-Content-

The content of the conductive material in the positive electrode mixed material layer is not specifically limited so long as it is within a range that yields the desired effects according to the present disclosure, but is preferably 0.02 mass% or more, more preferably 0.1 mass% or more, and even more preferably 0.2 mass% or more, and is preferably 10 mass% or less, more preferably 8 mass% or less, even more preferably 5 mass% or less, and further preferably 2 mass% or less. When the content of the conductive material in the positive electrode mixed material layer is not less than any of the lower limits set forth above, rate characteristics of the non-aqueous secondary battery can be improved. On the other hand, when the content of the conductive material in the positive electrode mixed material layer is not more than any of the upper limits set forth above, sufficiently high energy density of the non-aqueous secondary battery can be ensured because the previously described positive electrode active material can be sufficiently contained in the positive electrode mixed material layer.

{Polymer A}

The polymer A that is contained in the positive electrode mixed material layer includes a nitrile group-containing monomer unit and either or both of a conjugated diene monomer unit and an alkylene structural unit. The content of the polymer A in the positive electrode mixed material layer is within a specific range. By using the above-described polymer A in a specific amount in this manner, the polymer A can adsorb well to the previously described conductive material in a slurry composition that is used to form the positive electrode mixed material layer. Consequently, the polymer can be dispersed well with the conductive material in this slurry composition and also in the positive electrode mixed material layer formed using the slurry composition. Moreover, through good dispersion of the polymer A in the positive electrode mixed material layer, electrolyte solution mobility of the non-aqueous secondary battery can be improved because affinity of the positive electrode mixed material layer with the electrolyte solution (electrolyte solution affinity) increases. In particular, the inclusion of a specific amount of the polymer A in the positive electrode mixed material layer makes it possible for the non-aqueous secondary battery to display excellent electrolyte solution mobility even in a case in which the positive electrode mixed material layer is densified with an aim such as increasing the capacity of the non-aqueous secondary battery. Furthermore, rate characteristics of the non-aqueous secondary battery can be improved because the conductive material can be dispersed well in the positive electrode mixed material layer as described above. The inclusion of a specific amount of the polymer A in the positive electrode mixed material layer can also improve cell windability of the non-aqueous secondary battery due to increased flexibility of the positive electrode mixed material layer.
Note that the polymer A may include structural units other than a nitrile group-containing monomer unit, a conjugated diene monomer unit, and an alkylene structural unit within a range that yields the desired effects according to the present disclosure.

-Nitrile group-containing monomer unit-

Examples of nitrile group-containing monomers that can form a nitrile group-containing monomer unit include α,β-ethylenically unsaturated nitrile monomers. No specific limitations are placed on α,β-ethylenically unsaturated nitrile monomers that can be used other than being an α,β-ethylenically unsaturated compound that contains a nitrile group. Examples include acrylonitrile; α-halogenoacrylonitriles such as α-chloroacrylonitrile and α-bromoacrylonitrile; and α-alkylacrylonitriles such as methacrylonitrile and α-ethylacrylonitrile. Of these examples, acrylonitrile and methacrylonitrile are preferable as nitrile group-containing monomers from a viewpoint of further improving rate characteristics of the non-aqueous secondary battery, with acrylonitrile being more preferable.
One of these nitrile group-containing monomers may be used individually, or two or more of these nitrile group-containing monomers may be used in combination.
The proportional content of nitrile group-containing monomer units in the polymer A when all repeating units (total of structural units and monomer units) in the polymer A are taken to be 100 mass% is preferably 10 mass% or more, more preferably 20 mass% or more, and even more preferably 25 mass% or more, and is preferably 50 mass% or less, more preferably 45 mass% or less, and even more preferably 40 mass% or less. When the proportional content of nitrile group-containing monomer units in the polymer A is not less than any of the lower limits set forth above, rate characteristics of the non-aqueous secondary battery can be further improved. Moreover, when the proportional content of nitrile group-containing monomer units in the polymer A is not less than any of the lower limits set forth above, adhesiveness of the positive electrode and the separator can be improved in a case in which the positive electrode mixed material layer of the positive electrode and the subsequently described adhesive layer of the separator are in contact inside of the non-aqueous secondary battery, for example. On the other hand, when the proportional content of nitrile group-containing monomer units in the polymer A is not more than any of the upper limits set forth above, rate characteristics and cycle characteristics of the non-aqueous secondary battery can be further improved due to the degree of swelling in electrolyte solution of the polymer A being restricted from becoming excessively high.

-Conjugated diene monomer unit-

Examples of nitrile group-containing monomers that can form a conjugated diene monomer unit include conjugated diene compounds having a carbon number of 4 or more such as 1,3-butadiene, isoprene, 2,3-dimethyl-1,3-butadiene, 2-ethyl-1,3-butadiene, and 1,3-pentadiene.
Of these examples, 1,3-butadiene is preferable as a conjugated diene monomer from a viewpoint of restricting the degree of swelling in electrolyte solution of the polymer A from becoming excessively high and improving rate characteristics and cycle characteristics of the non-aqueous secondary battery.

-Alkylene structural unit-

An alkylene structural unit is a repeating unit composed of only an alkylene structure represented by a general formula $-C_nH_{2n}-$ (n is an integer of 2 or more).
Although the alkylene structural unit may be linear or branched, the alkylene structural unit is preferably linear (i.e., is preferably a linear alkylene structural unit). Moreover, the carbon number of the alkylene structural unit is preferably 4 or more (i.e., n in the preceding general formula is preferably an integer of 4 or more).
No specific limitations are placed on the method by which the alkylene structural unit is introduced into the polymer. For example, method (1) or (2), set forth below, may be used.

(1) A method in which a polymer is produced from a monomer composition containing a conjugated diene monomer and then the polymer is hydrogenated so as to convert a conjugated diene monomer unit to an alkylene structural unit
(2) A method in which a polymer is produced from a monomer composition containing a 1-olefin monomer

Of these methods, method (1) is preferable in terms of ease of production of the polymer.
In other words, the alkylene structural unit is preferably a structural unit obtained through hydrogenation of a conjugated diene monomer unit (i.e., is preferably a hydrogenated conjugated diene unit), and is more preferably a structural unit obtained through hydrogenation of a 1,3-butadiene unit (i.e., is more preferably a hydrogenated 1,3-butadiene unit).
Note that the 1-olefin monomer may be ethylene, propylene, 1-butene, 1-hexene, or the like, for example.
One of these conjugated diene monomers or 1-olefin monomers may be used individually, or two or more of these conjugated diene monomers or 1-olefin monomers may be used in combination.
The total proportional content of conjugated diene monomer units and alkylene structural units in the polymer A when all repeating units (total of structural units and monomer units) in the polymer A are taken to be 100 mass% is preferably 50 mass% or more, more preferably 55 mass% or more, and even more preferably 60 mass% or more, and is preferably 90 mass% or less, preferably 80 mass% or less, and even more preferably 75 mass% or less.

-Structural unit derived from conjugated diene monomer polymerized by 1,2-bonding or 3,4-bonding-

Note that a conjugated diene monomer unit in the polymer A may have a structure resulting from polymerization of a conjugated diene monomer by 1,2-bonding (1,2-addition polymerization), may have a structure resulting from polymerization of a conjugated diene monomer by 3,4-bonding (3,4-addition polymerization), or may have a structure resulting from polymerization of a conjugated diene monomer by 1,4-bonding (1,4-addition polymerization).
The total proportional content of structural units derived from a conjugated diene monomer polymerized by 1,2-bonding and structural units derived from a conjugated diene monomer polymerized by 3,4-bonding in the polymer A is preferably 30 mass% or less, more preferably 20 mass% or less, and even more preferably 10 mass% or less. When the total proportional content of structural units derived from a conjugated diene monomer polymerized by 1,2-bonding and structural units derived from a conjugated diene monomer polymerized by 3,4-bonding in the polymer A is not more than any of the upper limits set forth above, rate characteristics and cycle characteristics of the non-aqueous secondary battery can be improved because excessive formation of side chain structures in the polymer A can be inhibited, and the degree of swelling in electrolyte solution of the polymer A can be restricted from becoming excessively high.
The lower limit for the total proportional content of structural units derived from a conjugated diene monomer polymerized by 1,2-bonding and structural units derived from a conjugated diene monomer polymerized by 3,4-bonding in the polymer A is not specifically limited and may be 0 mass%, may be 1 mass% or more, or may be 5 mass% or more.
Note that a "structural unit derived from a conjugated diene monomer polymerized by 1,2-bonding" and a "structural unit derived from a conjugated diene monomer polymerized by 3,4-bonding" in the polymer A may be hydrogenated. In other words, the term "structural unit derived from a conjugated diene monomer polymerized by 1,2-bonding" is considered to be inclusive of an alkylene structural unit formed through polymerization of a conjugated diene monomer by 1,2-bonding and subsequent hydrogenation, whereas the term "structural unit derived from a conjugated diene monomer polymerized by 3,4-bonding" is considered to be inclusive of an alkylene structural unit formed through polymerization of a conjugated diene monomer by 3,4-bonding and subsequent hydrogenation.

Moreover, in a case in which the conjugated diene monomer is 1,3-butadiene, the "total proportional content of structural units derived from a conjugated diene monomer polymerized by 1,2-bonding and structural units derived from a conjugated diene monomer polymerized by 3,4-bonding in the polymer A" means the "proportional content of structural units derived from a conjugated diene monomer (1,3-butadiene) polymerized by 1,2-bonding in the polymer A".

Furthermore, the total proportional content of structural units derived from a conjugated diene monomer polymerized by 1,2-bonding and structural units derived from a conjugated diene monomer polymerized by 3,4-bonding in the polymer A can be adjusted through polymerization conditions (for example, polymerization temperature, supply method of monomer units, and type and amount of used molecular weight modifier) in production of the polymer A, for example.

-Production method of polymer A-

No specific limitations are placed on the method by which the above-described polymer A is produced. For example, the polymer A can be produced by polymerizing a monomer composition containing the monomers described above to obtain a polymer and subsequently hydrogenating the obtained polymer as necessary.

The proportional content of each monomer in the monomer composition used to produce the polymer can be set in accordance with the proportional content of each repeating unit in the polymer.

Additives such as an emulsifier, a dispersant, a polymerization initiator, a polymerization aid, and/or a molecular weight modifier used in polymerization may be the same as typically used. The amounts of these additives may also be the same as typically used. The polymerization conditions can be adjusted as appropriate depending on the polymerization method, the type of polymerization initiator, and so forth.

The polymerization method is not specifically limited and may, for example, be any of solution polymerization, suspension polymerization, bulk polymerization, and emulsion polymerization. Moreover, ionic polymerization, radical polymerization, living radical polymerization, or the like may be adopted as the polymerization reaction.

The hydrogenation can be carried out by a known hydrogenation method such as an oil-layer hydrogenation method or a water-layer hydrogenation method. The catalyst used in the hydrogenation may be any selective hydrogenation catalyst that is commonly known such as a palladium-based catalyst or a rhodium-based catalyst. Two or more of such catalysts may be used in combination.

-Iodine value-

The iodine value of the polymer A can be set as 100 mg/100 mg or less, and is preferably 80 mg/100 mg or less, more preferably 60 mg/100 mg or less, and even more preferably 40 mg/100 mg or less. When the iodine value of the polymer A is not more than any of the upper limits set forth above, rate characteristics of the non-aqueous secondary battery can be further improved because adsorptivity of the polymer A to the conductive material improves, and even better dispersion of the conductive material in the positive electrode mixed material layer can be achieved.

Note that the lower limit for the iodine value of the polymer A is not specifically limited and may be 1 mg/100 mg or more, may be 5 mg/100 mg or more, or may be 10 mg/100 mg or more, for example.

Also note that the iodine value of the polymer A can be measured by a method in accordance with JIS K6235(2006).

-Weight-average molecular weight (Mw)-

The weight-average molecular weight (Mw) of the polymer A is preferably 500,000 or less, more preferably 300,000 or less, even more preferably 170,000 or less, and further preferably 100,000 or less, and is preferably 5,000 or more. When the weight-average molecular weight (Mw) of the polymer A is not more than any of the upper limits set forth above, rate characteristics of the non-aqueous secondary battery can be further improved because adsorptivity of the polymer A to the conductive material improves, and even better dispersion of the conductive material in the positive electrode mixed material layer can be achieved. On the other hand, when the weight-average molecular weight (Mw) of the polymer A is not less than the lower limit set forth above, cycle characteristics of the non-aqueous secondary battery can be improved because elution of the polymer A into the electrolyte solution can be inhibited.

Note that the weight-average molecular weight (Mw) of a polymer can be measured by a method described in the EXAMPLES section of the present specification.

-Content in positive electrode mixed material layer-

The content of the polymer A in the positive electrode mixed material layer is required to be 0.01 mass% or more, and is preferably 0.05 mass% or more, and more preferably 0.08 mass% or more. Moreover, the content of the polymer A in the positive electrode mixed material layer is required to be 8 mass% or less, and is preferably 4 mass% or less, and more preferably 3 mass% or less. When the content of the polymer A in the positive electrode mixed material layer is not less than any of the lower limits set forth above, electrolyte solution affinity of the positive electrode mixed material layer can be sufficiently increased, and electrolyte solution mobility of the non-aqueous secondary battery can be improved. Moreover, when the content of the polymer A in the positive electrode mixed material layer is not less than any of the lower limits set forth above, rate characteristics of the non-aqueous secondary battery can be improved because the conductive material can be dispersed well in the positive electrode mixed material layer. Furthermore, when the content of the polymer A in the positive electrode mixed material layer is not less than any of the lower limits set forth above, flexibility of the positive electrode mixed material layer can be sufficiently increased, and cell windability of the non-aqueous secondary battery can be improved. On the other hand, when the content of the polymer A in the positive electrode mixed material layer is not more than any of the upper limits set forth above, restriction of movement of the electrolyte solution due to an excessive amount of the polymer A can be inhibited, and sufficiently high electrolyte solution mobility of the non-aqueous secondary battery can be ensured.

{Other components}

The positive electrode mixed material layer may optionally contain other components besides the components described above.
Polymers having different chemical compositions from the polymer A described above, known additives such as described in JP2013-179040A, and so forth can be used as other components.
For example, a fluoropolymer can be used as a polymer having a different chemical composition from the polymer A described above. The fluoropolymer is a polymer that includes a fluorine-containing monomer unit. Specific examples of fluoropolymers include polyvinylidene fluoride (PVdF), a copolymer of vinylidene fluoride and hexafluoropropylene (PVdF-HFP), and the like that are described in JP2018-174150A, for example.
In a case in which a fluoropolymer is used as a polymer having a different chemical composition from the polymer A, the content of the fluoropolymer in the positive electrode mixed material layer can be adjusted within a range that yields the desired effects according to the present disclosure.

{Density}

The density of the positive electrode mixed material layer can be adjusted as appropriate depending on the type of positive electrode active material that is contained in the positive electrode mixed material layer. Energy density of the non-aqueous secondary battery can be improved by increasing the density of the positive electrode mixed material layer. On the other hand, electrolyte solution mobility of the non-aqueous secondary battery can be further improved by decreasing the density of the positive electrode mixed material layer. Moreover, cell windability and rate characteristics of the non-aqueous secondary battery can also be further improved by decreasing the density of the positive electrode mixed material layer.
Note that the density of a positive electrode mixed material layer can be measured by a method described in the EXAMPLES section of the present specification.
Also note that the density of the positive electrode mixed material layer can be adjusted through the types and amounts of components contained in the positive electrode mixed material layer, such as the positive electrode active material, the conditions of pressing in a production method of the positive electrode, and so forth, for example.

{Mass per unit area}

The mass per unit area of the positive electrode mixed material layer can be adjusted as appropriate depending on the type of positive electrode active material contained in the positive electrode mixed material layer. The capacity of the non-aqueous secondary battery can be increased by increasing the mass per unit area of the positive electrode mixed material layer. On the other hand, entry and exit of lithium ions from the positive electrode mixed material layer is facilitated and higher output can be achieved by decreasing the mass per unit area of the positive electrode mixed material layer.
Note that the mass per unit area of a positive electrode mixed material layer can be measured by a method described in the EXAMPLES section of the present specification.
Also note that the mass per unit area of the positive electrode mixed material layer can be adjusted through the types and amounts of components contained in the positive electrode mixed material layer, such as the positive electrode active material, the coating weight of a slurry composition for a positive electrode mixed material layer on the current collector in a subsequently described production method of the positive electrode, and so forth, for example.

{Void fraction}

The void fraction of the positive electrode mixed material layer is preferably 15% or more, more preferably 21% or more, even more preferably 24% or more, and further preferably 28% or more, and is preferably 50% or less, more preferably 45% or less, even more preferably 40% or less, and further preferably 37% or less. When the void fraction of the positive electrode mixed material layer is not less than any of the lower limits set forth above, electrolyte solution mobility of the non-aqueous secondary battery can be further improved. Moreover, when the void fraction of the positive electrode mixed material layer is not less than any of the lower limits set forth above, cell windability and rate characteristics of the non-aqueous secondary battery can be further improved. Furthermore, when the void fraction of the positive electrode mixed material layer is not more than any of the upper limits set forth above, sufficiently high energy density of the non-aqueous secondary battery can be ensured.

Note that the void fraction of the positive electrode mixed material layer can be adjusted through the types and amounts of components contained in the positive electrode mixed material layer, such as the positive electrode active material, the conditions of pressing in a production method of the positive electrode, and so forth, for example.

<<Production method of positive electrode>>

The positive electrode included in the presently disclosed non-aqueous secondary battery can be produced through a step of applying a slurry composition for a positive electrode mixed material layer containing the above-described positive electrode active material, conductive material, polymer A, and other components that can optionally be used onto the current collector (application step) and a step of drying the slurry composition that has been applied onto the current collector to form a positive electrode mixed material layer on the current collector (drying step), for example, but is not specifically limited to being produced in this manner.

{Slurry composition for positive electrode mixed material layer}

The slurry composition for a positive electrode mixed material layer can be produced by, for example, dissolving or dispersing the above-described positive electrode active material, conductive material, polymer A, and other components that can optionally be used in a solvent.

Specifically, the slurry composition for a positive electrode mixed material layer can be produced by mixing the above-described components and the solvent using a mixer such as a ball mill, a sand mill, a bead mill, a pigment disperser, a grinding machine, an ultrasonic disperser, a homogenizer, a planetary mixer, or a FILMIX.

The solvent is not specifically limited and may be an organic solvent such as N-methylpyrrolidone (NMP), N,N-dimethylformamide, or acetone, for example. Of these solvents, N-methylpyrrolidone (NMP) is preferable from a viewpoint of solubility of the polymer A and stability of the slurry composition for a positive electrode mixed material layer.

Note that the slurry composition for a positive electrode mixed material layer may be produced by mixing the conductive material and the polymer A in the solvent to produce a conductive material dispersion liquid and subsequently further mixing this conductive material dispersion liquid with the positive electrode active material and other components in the solvent.

{Application step}

The slurry composition for a positive electrode mixed material layer can be applied onto the current collector by any commonly known method without any specific limitations. Specific examples of application methods that can be used include doctor blading, dip coating, reverse roll coating, direct roll coating, gravure coating, extrusion coating, and brush coating. The slurry composition for a positive electrode mixed material layer may be applied onto just one side of the current collector or may be applied onto both sides of the current collector. The thickness of the slurry coating on the current collector after application but before drying may be set as appropriate in accordance with the thickness of the positive electrode mixed material layer to be obtained after drying.

{Drying step}

The slurry composition for a positive electrode mixed material layer on the current collector can be dried by any commonly known method without any specific limitations. Examples of drying methods that can be used include drying by warm, hot, or low-humidity air; drying in a vacuum; and drying by irradiation with infrared light, electron beams, or the like. Through drying of the slurry composition for a positive electrode mixed material layer on the current collector in this manner, a positive electrode mixed material layer can be formed on the current collector to thereby obtain a positive electrode for a non-aqueous secondary battery that includes the current collector and the positive electrode mixed material layer.

After the drying step, the positive electrode mixed material layer may be further subjected to a pressing process such as mold pressing or roll pressing. The pressing process can improve adhesiveness of the positive electrode mixed material layer and the current collector. Moreover, the pressing process makes it easy to adjust the density and the void fraction of the positive electrode mixed material layer to within any of the specific ranges set forth above.

<Negative electrode>

Known positive electrodes and negative electrodes that are used in non-aqueous secondary batteries can be used as the negative electrode.

Specifically, an electrode having a negative electrode mixed material layer formed on a current collector can be used as the negative electrode without any specific limitations. Note that the current collector, components in the negative electrode mixed material layer (for example, a negative electrode active material and a binder for a negative electrode mixed material layer), and the method by which the electrode mixed material layer is formed on the current collector may be known examples thereof. Specifically, any of those described in JP2013-145763A, for example, can be adopted.

<Electrolyte solution>

The electrolyte solution is normally an organic electrolyte solution obtained by dissolving a supporting electrolyte in an organic solvent. For example, when the non-aqueous secondary battery is a lithium ion secondary battery, a lithium salt is used as the supporting electrolyte. Examples of lithium salts that may be used include $LiPF_6$, $LiAsF_6$, $LiBF_4$, $LiSbF_6$, $LiAlCl_4$, $LiClO_4$, $CF_3SO_3Li$, $C_4F_9SO_3Li$, $CF_3COOLi$, $(CF_3CO)_2NLi$, $(CF_3SO_2)_2NLi$, and $(C_2F_5SO_2)NLi$. Of these lithium salts, $LiPF_6$, $LiClO_4$, and $CF_3SO_3Li$ are preferable because they readily dissolve in solvents and exhibit a high degree of dissociation, with $LiPF_6$ being particularly preferable. One electrolyte may be used individually, or two or more electrolytes may be used in combination in a freely selected ratio. In general, lithium ion conductivity tends to increase when a supporting electrolyte having a high degree of dissociation is used. Therefore, lithium ion conductivity can be adjusted through the type of supporting electrolyte that is used.

The organic solvent used in the electrolyte solution is not specifically limited so long as the supporting electrolyte can dissolve therein. Examples of organic solvents that can suitably be used include carbonates such as dimethyl carbonate (DMC), ethylene carbonate (EC), diethyl carbonate (DEC), propylene carbonate (PC), butylene carbonate (BC), and ethyl methyl carbonate (EMC); esters such as $\gamma$-butyrolactone and methyl formate; ethers such as 1,2-dimethoxyethane and tetrahydrofuran; and sulfur-containing compounds such as sulfolane and dimethyl sulfoxide. Furthermore, a mixture of such solvents may be used. Of these solvents, carbonates are preferable due to having a high permittivity and a wide stable potential region, and a mixture of ethylene carbonate and ethyl methyl carbonate is more preferable.

Known additives such as vinylene carbonate (VC), fluoroethylene carbonate (FEC), and ethyl methyl sulfone may be added to the electrolyte solution.

<Separator>

The separator that is included in the presently disclosed non-aqueous secondary battery includes at least a separator substrate and an adhesive layer formed on the separator substrate, and may optionally further include a heat-resistant layer formed on the substrate. Note that in the present specification, a separator that includes at least a separator substrate and an adhesive layer formed on the separator substrate may be referred to as an "adhesive layer-equipped separator".

By using a separator that includes an adhesive layer in the non-aqueous secondary battery, it is possible to improve heat shrinkage resistance of the separator because the separator can be adhered well to another member such as the positive electrode, for example, inside of the non-aqueous secondary battery.

<<Separator substrate>>

The separator substrate is not specifically limited and may be a known separator substrate such as an organic separator substrate, for example. The organic separator substrate is a porous member that is formed of an organic material. The organic separator substrate may, for example, be a microporous membrane or non-woven fabric containing a polyolefin resin such as polyethylene or polypropylene, an aromatic polyamide resin, or the like, and is preferably a microporous membrane or non-woven fabric made of polyethylene due to the excellent strength thereof. Note that although the organic separator substrate can be of any thickness, the thickness of the organic separator substrate is normally 0.5 $\mu$m or more, and preferably 5 $\mu$m or more, and is normally 40 $\mu$m or less, preferably 30 $\mu$m or less, and more preferably 20 $\mu$m or less.

<<Adhesive layer>>

The adhesive layer that is formed on the separator substrate contains at least a polymer B and may optionally further contain components other than the polymer B (i.e., other components). The adhesive layer has a ratio of coverage by the polymer B that is within a specific range.

As a result of the adhesive layer having a ratio of coverage by the polymer B that is within a specific range, the adhesive layer can impart excellent heat shrinkage resistance to the separator and improve electrolyte solution mobility of the non-aqueous secondary battery by causing good adhesion of the separator to another battery member inside of the non-aqueous secondary battery.

The adhesive layer that is formed on the separator substrate is preferably in contact with the previously described positive electrode mixed material layer of the positive electrode inside of the presently disclosed non-aqueous secondary battery. Through the adhesive layer that has a ratio of coverage by the polymer B that is within a specific range and the positive electrode mixed material layer that has excellent electrolyte solution affinity as previously described being in contact, electrolyte solution mobility of the non-aqueous secondary battery can be further improved.

Note that although an adhesive layer may be formed on just one side of the separator substrate or adhesive layers may be formed on both sides of the separator substrate in the separator that is included in the presently disclosed non-aqueous secondary battery, it is preferable that an adhesive layer is formed on at least a surface at a positive electrode-side of the separator substrate from a viewpoint of enabling the adhesive layer and the positive electrode mixed material layer to be in contact as previously described, and it is more preferable that adhesive layers are formed on both sides of the separator substrate from a viewpoint of increasing adhesiveness with both the positive electrode and the negative electrode that are adjacent thereto and further improving heat shrinkage resistance of the separator.

{Polymer B}

The polymer B that is contained in the adhesive layer is a component that can function as a binder.

A polymer that is insoluble in a liquid medium or a polymer that is soluble in a liquid medium can be used as the polymer B without any specific limitations so long as it is a polymer that can function as a binder.

Note that the phrase "polymer that is soluble in a liquid medium" as used in the present disclosure refers to a polymer for which insoluble content is less than 1.0 mass% when 0.5 g of the polymer is dissolved in 100 g of the liquid medium at a temperature of 25°C. Moreover, the phrase "polymer that is insoluble in a liquid medium" as used in the present disclosure refers to a polymer for which insoluble content is 90 mass% or more when 0.5 g of the polymer is dissolved in 100 g of the liquid medium at 25°C. The liquid medium is not specifically limited and may be water, may be an organic solvent, or may be a mixed solvent obtained by mixing water and an organic solvent in a freely selected ratio, for example. The organic solvent is not specifically limited and may be N-methylpyrrolidone (NMP), acetone, methyl ethyl ketone, or the like, for example.

-Chemical composition-

The polymer B is not specifically limited but preferably includes one or more polar group-containing monomer units selected from the group consisting of an acid group-containing monomer unit, a hydroxyl group-containing monomer unit, an epoxy group-containing monomer unit, an amide group-containing monomer unit, and a nitrile group-containing monomer unit. Moreover, the polymer B more preferably includes one or more selected from the group consisting of an acid group-containing monomer unit, an epoxy group-containing monomer unit, and a nitrile group-containing monomer unit, and even more preferably includes each of an acid group-containing monomer unit, an epoxy group-containing monomer unit, and a nitrile group-containing monomer unit. When the polymer B includes any of the specific polar group-containing monomer units set forth above, adhesiveness between the separator and the positive electrode can be further increased, which is presumed to be due to interactions between the polymer B in the adhesive layer and the polymer A in the positive electrode mixed material layer in a case in which the adhesive layer and the positive electrode mixed material layer are in contact inside of the non-aqueous secondary battery. Consequently, electrolyte solution mobility of the non-aqueous secondary battery and heat shrinkage resistance of the separator can be further improved.

Note that the polymer B preferably includes a (meth)acrylic acid ester monomer unit other than the specific polar group-containing monomer units described above. When the polymer B further includes a (meth)acrylic acid ester monomer unit, cycle characteristics of the non-aqueous secondary battery can be improved through increased electrolyte solution affinity of the adhesive layer.

The polymer B may further include monomer units other than the specific polar group-containing monomers described above and a (meth)acrylic acid ester monomer unit (i.e., other monomer units).

=Polar group-containing monomer units=

==Acid group-containing monomer unit==

Examples of acid group-containing monomers that can form an acid group-containing monomer unit include monomers having an acid group such as carboxy group-containing monomers, sulfo group-containing monomers, and phosphate group-containing monomers.

Moreover, examples of carboxy group-containing monomers include monocarboxylic acids and dicarboxylic acids. Examples of monocarboxylic acids include acrylic acid, methacrylic acid, and crotonic acid. Examples of dicarboxylic acids include maleic acid, fumaric acid, and itaconic acid.

Examples of sulfo group-containing monomers include vinyl sulfonic acid, methyl vinyl sulfonic acid, (meth)allyl sulfonic acid, (meth)acrylic acid 2-sulfoethyl, 2-acrylamido-2-methylpropane sulfonic acid, and 3-allyloxy-2-hydroxypropane sulfonic acid.

Examples of phosphate group-containing monomers include 2-(meth)acryloyloxyethyl phosphate, methyl-2-(meth)acryloyloxyethyl phosphate, and ethyl-(meth)acryloyloxyethyl phosphate.

In the present disclosure, "(meth)allyl" is used to indicate "allyl" and/or "methallyl", and "(meth)acryloyl" is used to indicate "acryloyl" and/or "methacryloyl".

Of these examples, carboxy group-containing monomers are preferable, monocarboxylic acids are more preferable, and acrylic acid and methacrylic acid are even more preferable as acid group-containing monomers.

One acid group-containing monomer may be used individually, or two or more acid group-containing monomers may be used in combination in a freely selected ratio.

In a case in which the polymer B includes an acid group-containing monomer unit, the proportional content of acid group-containing monomer units in the polymer B is preferably 0.01 mass% or more, more preferably 0.5 mass% or more, and even more preferably 1 mass% or more, and is preferably 10 mass% or less, more preferably 8 mass% or less, and even more preferably 5 mass% or less. When the proportional content of acid group-containing monomer units in the polymer B is within any of the specific ranges set forth above, electrolyte solution mobility of the non-aqueous secondary battery and heat shrinkage resistance of the separator can be even further improved.

==Hydroxyl group-containing monomer unit==

Examples of hydroxyl group-containing monomers that can form a hydroxyl group-containing monomer unit include hydroxyl group-containing vinyl monomers, but are not specifically limited thereto. A hydroxyl group-containing vinyl monomer is a monofunctional compound that includes a hydroxyl group (-OH) and a vinyl group (-CH=CH$_2$) or an isopropenyl group (-C(CH$_3$)=CH$_2$) and that has one ethylenically unsaturated bond (C=C) of the vinyl group in a molecule thereof. Examples of hydroxyl group-containing vinyl monomers include 2-hydroxyethyl acrylate, 2-hydroxyethyl methacrylate, 2-hydroxypropyl acrylate, 2-hydroxypropyl methacrylate, N-hydroxymethylacrylamide (N-methylolacrylamide), N-hydroxymethylmethacrylamide, N-hydroxyethylacrylamide, and N-hydroxyethylmethacrylamide. One of these hydroxyl group-containing vinyl monomers may be used individually, or two or more of these hydroxyl group-containing vinyl monomers may be used in combination in a freely selected ratio.

Note that a hydroxyl group-containing vinyl monomer that also includes an amide group, such as N-hydroxymethylacrylamide (N-methylolacrylamide), for example, is treated as a "hydroxyl group-containing monomer" in the present disclosure.

In a case in which the polymer B includes a hydroxyl group-containing monomer unit, the proportional content of hydroxyl group-containing monomer units in the polymer B can be adjusted as appropriate within a range that yields the desired effects according to the present disclosure.

==Epoxy group-containing monomer unit==

Examples of epoxy group-containing monomers that can form an epoxy group-containing monomer unit include unsaturated glycidyl ethers such as vinyl glycidyl ether, allyl glycidyl ether, butenyl glycidyl ether, and o-allylphenyl glycidyl ether; monoepoxides of dienes and polyenes such as butadiene monoepoxide, chloroprene monoepoxide, 4,5-epoxy-2-pentene, 3,4-epoxy-1-vinylcyclohexene, and 1,2-epoxy-5,9-cyclododecadiene; alkenyl epoxides such as 3,4-epoxy-1-butene, 1,2-epoxy-5-hexene, and 1,2-epoxy-9-decene; and glycidyl esters of unsaturated carboxylic acids such as glycidyl acrylate, glycidyl methacrylate, glycidyl crotonate, glycidyl 4-heptenoate, glycidyl sorbate, glycidyl linoleate, glycidyl 4-methyl-3-pentenoate, glycidyl ester of 3-cyclohexenecarboxylic acid, and glycidyl ester of 4-methyl-3-cyclohexenecarboxylic acid. One of these epoxy group-containing monomers may be used individually, or two or more of these epoxy group-containing monomers may be used in combination in a freely selected ratio.

Of these examples, allyl glycidyl ether (AGE) and glycidyl methacrylate (GMA) are preferable, and allyl glycidyl ether (AGE) is more preferable as an epoxy group-containing monomer.

In a case in which the polymer B includes an epoxy group-containing monomer unit, the proportional content of epoxy group-containing monomer units in the polymer B is preferably 0.01 mass% or more, more preferably 0.05 mass% or more, and even more preferably 0.1 mass% or more, and is preferably 10 mass% or less, more preferably 7 mass% or less, and even more preferably 5 mass% or less. When the proportional content of epoxy group-containing monomer units in the polymer B is within any of the specific ranges set forth above, electrolyte solution mobility of the non-aqueous secondary battery and heat shrinkage resistance of the separator can be even further improved. Note that the proportional content of epoxy group-containing monomer units in the polymer B may be not less than 10 mass% and not more than 20 mass%, for example.

==Amide group-containing monomer unit==

Examples of amide group-containing monomers that can form an amide group-containing monomer unit include N-vinylacetamide, (meth)acrylamide, dimethyl(meth)acrylamide, diethyl(meth)acrylamide, N-methoxymethyl(meth)acrylamide, and dimethylaminopropyl(meth)acrylamide. One of these amide group-containing monomers may be used individually, or two or more of these amide group-containing monomers may be used in combination in a freely selected ratio.

In a case in which the polymer B includes an amide group-containing monomer unit, the proportional content of amide group-containing monomer units in the polymer B can be adjusted as appropriate within a range that yields the desired effects according to the present disclosure.

==Nitrile group-containing monomer unit==

Examples of nitrile group-containing monomers that can form a nitrile group-containing monomer unit include those given as examples of nitrile group-containing monomers that can be used in production of the previously described polymer A in the positive electrode mixed material layer. Of these examples, acrylonitrile and methacrylonitrile are preferable, and acrylonitrile is more preferable as a nitrile group-containing monomer.

In a case in which the polymer B includes a nitrile group-containing monomer unit, the proportional content of nitrile group-containing monomer units in the polymer B is preferably 0.01 mass% or more, more preferably 5 mass% or more, and even more preferably 10 mass% or more, and is preferably 40 mass% or less, more preferably 30 mass% or less, and even more preferably 20 mass% or less. When the proportional content of nitrile group-containing monomer units in the polymer B is within any of the specific ranges set forth above, electrolyte solution mobility of the non-aqueous secondary battery and heat shrinkage resistance of the separator can be even further improved.

==Total content of polar group-containing monomer units==

The total proportional content of the above-described specific polar group-containing monomer units in the polymer B is preferably 0.1 mass% or more, more preferably 6 mass% or more, even more preferably 12 mass% or more, and further preferably 17 mass% or more, and is preferably 50 mass% or less, more preferably 40 mass% or less, and even more preferably 30 mass% or less. When the total proportional content of the above-described specific polar group-containing monomer units in the polymer B is within any of the specific ranges set forth above, electrolyte solution mobility of the non-aqueous secondary battery, adhesiveness between the separator and another battery member such as the positive electrode, and heat shrinkage resistance of the separator can be even further improved.

=Relationship with polymer A in positive electrode mixed material layer=

When the total proportional content of the above-described specific polar group-containing monomer units in the polymer B is denoted as X and the proportional content of nitrile group-containing monomer units in the previously described polymer A contained in the positive electrode mixed material layer is denoted as Y, a ratio X/Y of X and Y is preferably 0.05 or more, more preferably 0.15 or more, and even more preferably 0.35 or more, and is preferably 1.2 or less, more preferably 1.0 or less, and even more preferably 0.8 or less. When the ratio X/Y of X and Y described above is within any of the specific ranges set forth above, electrolyte solution mobility of the non-aqueous secondary battery and heat shrinkage resistance of the separator can be even further improved, which is presumed to be due to interactions between the polymer B in the adhesive layer and the polymer A in the positive electrode mixed material layer described above increasing.

=(Meth)acrylic acid ester monomer unit=

Examples of (meth)acrylic acid ester monomers that can form a (meth)acrylic acid ester monomer unit include acrylic acid alkyl esters such as methyl acrylate, ethyl acrylate, n-propyl acrylate, isopropyl acrylate, n-butyl acrylate, t-butyl acrylate, pentyl acrylate, hexyl acrylate, heptyl acrylate, octyl acrylate, 2-ethylhexyl acrylate, nonyl acrylate, decyl acrylate, lauryl acrylate, n-tetradecyl acrylate, and stearyl acrylate; and methacrylic acid alkyl esters such as methyl methacrylate, ethyl methacrylate, n-propyl methacrylate, isopropyl methacrylate, n-butyl methacrylate, t-butyl methacrylate, pentyl methacrylate, hexyl methacrylate, heptyl methacrylate, octyl methacrylate, 2-ethylhexyl methacrylate, nonyl methacrylate, decyl methacrylate, lauryl methacrylate, n-tetradecyl methacrylate, and stearyl methacrylate. One of these (meth)acrylic acid ester monomers may be used individually, or two or more of these (meth)acrylic acid ester monomers may be used in combination in a freely selected ratio.

Of these examples, acrylic acid alkyl esters are preferable, and methyl methacrylate, n-butyl acrylate, and 2-ethylhexyl acrylate are more preferable as (meth)acrylic acid ester monomers.

Note that (meth)acrylic acid ester monomers including the specific polar groups described above (acid group, hydroxyl group, epoxy group, amide group, and nitrile group) are each treated as a specific polar group-containing monomer such as previously described in the present disclosure.

The proportional content of (meth)acrylic acid ester monomer units in the polymer B is preferably 5 mass% or more, more preferably 10 mass% or more, and even more preferably 20 mass% or more, and is preferably 80 mass% or less, more preferably 70 mass% or less, and even more preferably 60 mass% or less. When the proportional content of (meth)acrylic acid ester monomer units in the polymer B is not less than any of the lower limits set forth above, cycle characteristics of the non-aqueous secondary battery can be further improved. On the other hand, when the proportional content of (meth)acrylic acid ester monomer units in the polymer B is not more than any of the upper limits set forth above, sufficiently high electrolyte solution mobility of the non-aqueous secondary battery and heat shrinkage resistance of the separator can be ensured through sufficient inclusion of the above-described specific polar group-containing monomer units in the water-insoluble polymer.

=Other monomer units=

Examples of other monomer units include, but are not specifically limited to, a cross-linkable monomer unit, an aromatic vinyl monomer unit, and so forth.

Examples of aromatic vinyl monomers that can form an aromatic vinyl monomer unit include aromatic monovinyl compounds such as styrene, α-methylstyrene, p-t-butylstyrene, butoxystyrene, vinyltoluene, chlorostyrene, and vinylnaphthalene. Of these aromatic vinyl monomers, styrene is preferable. One of these aromatic vinyl monomers may be used individually, or two or more of these aromatic vinyl monomers may be used in combination.

A monomer that can form a cross-linked structure when polymerized may be used as a cross-linkable monomer that can form a cross-linkable monomer unit. More specifically, a polyfunctional monomer that includes two or more ethylenically unsaturated bonds per one molecule may be used.

Examples of polyfunctional monomers include polyfunctional (meth)acrylates such as allyl (meth)acrylate, ethylene di(meth)acrylate, ethylene glycol di(meth)acrylate, diethylene glycol di(meth)acrylate, triethylene glycol di(meth)acrylate, tetraethylene glycol di(meth)acrylate, and trimethylolpropane tri(meth)acrylate; polyfunctional allyl/vinyl ethers such as dipropylene glycol diallyl ether, polyglycol diallyl ether, triethylene glycol divinyl ether, hydroquinone diallyl ether, and tetraallyloxyethane; and divinylbenzene. Of these cross-linkable monomers, allyl methacrylate and ethylene glycol dimethacrylate are preferable.

Note that one of these cross-linkable monomers may be used individually, or two or more of these cross-linkable monomers may be used in combination.

The proportional content of other monomer units in the polymer B can be adjusted as appropriate within a range that yields the desired effects according to the present disclosure.

-Example of polymer B-

One polymer that preferably has the chemical composition set forth above may be used individually as the polymer B, or a mixture that is obtained by mixing two or more polymers having different chemical compositions in a freely selected ratio and that is preferably adjusted to the chemical composition set forth above may be used as the polymer B.

Note that in a case in which the polymer B is a mixture of two or more polymers having different chemical compositions, the proportional content of each monomer unit in the polymer B described above indicates the proportional content of each monomer unit when all repeating units included in the polymer B that is a mixture of two or more polymers are taken to be 100 mass%.

Although the following provides a detailed description of one example of a case in which the polymer B is a mixture of a first polymer and a second polymer having different chemical compositions, the present disclosure is not limited to this example.

=First polymer=

The first polymer that is included in one example of the polymer B is a component that, in the adhesive layer, functions as a binder that can cause good adhesion between the separator and another battery member.

==Structure==

The first polymer preferably has a particulate form, but is not specifically limited thereto. In a case in which the first polymer is a particulate polymer, the first polymer is preferably a particulate polymer having a core-shell structure in which an outer surface of a core portion is at least partially covered from a viewpoint of improving blocking resistance of the separator that includes the adhesive layer.

Moreover, it is preferable that the shell portion partially covers the outer surface of the core portion from a viewpoint of further improving blocking resistance of the separator that includes the adhesive layer. In other words, it is preferable that the shell portion of the particulate polymer serving as the first polymer covers part of the outer surface of the core portion but does not completely cover the outer surface of the core portion. In terms of external appearance, even in a situation in which the outer surface of the core portion appears to be completely covered by the shell portion, the shell portion is still considered to be a shell portion that partially covers the outer surface of the core portion so long as pores are formed that pass between inside and outside of the shell portion. Accordingly, a particulate polymer that includes a shell portion having fine pores that pass between an outer surface of the shell portion (i.e., a circumferential surface of the particulate polymer) and an outer surface of a core portion, for example, also corresponds to the preferred particulate polymer set forth above in which the shell portion partially covers the outer surface of the core portion.

Note that the particulate polymer having a core-shell structure that serves as the first polymer may include any constituent elements other than the core portion and the shell portion described above so long as the expected effects are not significantly lost. Specifically, the particulate polymer may, for example, include a portion inside of the core portion that is formed of a different polymer from the core portion. In one specific example, a residual seed particle may be present inside of the core portion in a situation in which seed particles are used in production of the particulate polymer by seeded polymerization. However, from a viewpoint of more noticeably displaying the expected effects, it is preferable that the particulate polymer is composed of only the core portion and the shell portion.

In the particulate polymer having a core-shell structure that serves as the first polymer, the proportion constituted by the core portion (core proportion) among the total of the core portion and the shell portion is not specifically limited but is preferably 30 mass% or more, more preferably 40 mass% or more, and particularly preferably 50 mass% or more, and is preferably 90 mass% or less, more preferably 85 mass% or less, and particularly preferably 80 mass% or less. When the core proportion of the particulate polymer is 30 mass% or more, blocking resistance of the separator that includes the adhesive layer and adhesiveness of this separator to another battery member can be ensured. On the other hand, when the core proportion of the particulate polymer is 90 mass% or less, reduction of adhesiveness of the separator including the adhesive layer to another battery member can be inhibited.

==Chemical composition==

The first polymer preferably includes, from among the specific polar group-containing monomer units described above, one or more selected from the group consisting of an acid group-containing monomer unit, an epoxy group-containing monomer unit, and a nitrile group-containing monomer unit, and more preferably includes an acid group-containing monomer unit and a nitrile group-containing monomer unit, but is not specifically limited thereto.

Moreover, the first polymer preferably includes a (meth)acrylic acid ester monomer unit other than the specific polar group-containing monomer units described above.

Furthermore, the first polymer may further include other monomer units such as an aromatic vinyl monomer unit and a cross-linkable monomer unit.

The proportional content of acid group-containing monomer units in the first polymer can be adjusted as appropriate such that the polymer B including the first polymer has the preferred chemical composition set forth above, but is preferably 0.01 mass% or more, more preferably 0.5 mass% or more, even more preferably 1 mass% or more, and further preferably 3.1 mass% or more, and is preferably 10 mass% or less, more preferably 8 mass% or less, and even more preferably 5 mass% or less, for example.

In a case in which the first polymer is a particulate polymer having a core-shell structure, an acid group-containing monomer unit may be included in at least either one of the core portion and the shell portion, but it is preferable that acid group-containing monomer units are included in both the core portion and the shell portion.

The proportional content of acid group-containing monomer units included in the core portion of the first polymer when all repeating units in the first polymer are taken to be 100 mass% is preferably 0.008 mass% or more, more preferably 0.4 mass% or more, and even more preferably 0.8 mass% or more, and is preferably 7 mass% or less, more preferably 6 mass% or less, even more preferably 4 mass% or less, and further preferably 2.8 mass% or less.

Moreover, the proportional content of acid group-containing monomer units included in the shell portion of the first polymer when all repeating units in the first polymer are taken to be 100 mass% is preferably 0.002 mass% or more, more preferably 0.1 mass% or more, and even more preferably 0.2 mass% or more, and is preferably 3 mass% or less, more preferably 2 mass% or less, and even more preferably 1 mass% or less.

Note that although no specific limitations are made, methacrylic acid is preferable as an acid group-containing monomer that can form an acid group-containing monomer unit in the first polymer.

The proportional content of nitrile group-containing monomer units in the first polymer can be adjusted as appropriate such that the polymer B including the first polymer has the preferred chemical composition set forth above, but is preferably 0.01 mass% or more, more preferably 5 mass% or more, even more preferably 10 mass% or more, and further preferably 15.7 mass% or more, and is preferably 40 mass% or less, more preferably 30 mass% or less, and even more preferably 20 mass% or less, for example.

In a case in which the first polymer is a particulate polymer having a core-shell structure, a nitrile group-containing monomer may be included in at least either one of the core portion and the shell portion, but it is preferable that nitrile group-containing monomers are included in both the core portion and the shell portion.

The proportional content of nitrile group-containing monomer units included in the core portion of the first polymer when all repeating units in the first polymer are taken to be 100 mass% is preferably 0.008 mass% or more, more preferably 4.5 mass% or more, and even more preferably 9 mass% or more, and is preferably 36 mass% or less, more preferably 27 mass% or less, and even more preferably 17.5 mass% or less.

Moreover, the proportional content of nitrile group-containing monomer units included in the shell portion of the first polymer when all repeating units in the first polymer are taken to be 100 mass% is preferably 0.002 mass% or more, more preferably 0.5 mass% or more, and even more preferably 1 mass% or more, and is preferably 4 mass% or less, more preferably 3 mass% or less, and even more preferably 2.5 mass% or less.

Note that although no specific limitations are made, acrylonitrile is preferable as a nitrile group-containing monomer that can form a nitrile group-containing monomer unit in the first polymer.

The proportional content of epoxy group-containing monomer units in the first polymer can be adjusted as appropriate such that the polymer B including the first polymer has the preferred chemical composition set forth above. For example, the proportional content of epoxy group-containing monomer units in the first polymer can be set as 1 mass% or more, can be set as 5 mass% or more, or can be set as 10 mass% or more, and can be set as 50 mass% or less, can be set as 40 mass% or less, or can be set as 30 mass% or less.

In a case in which the first polymer is a particulate polymer having a core-shell structure, an epoxy group-containing monomer unit may be included in at least either one of the core portion and the shell portion.

Although no specific limitations are made, glycidyl methacrylate is preferable as an epoxy group-containing monomer that can form an epoxy group-containing monomer unit in the first polymer.

The proportional content of (meth)acrylic acid ester monomer units in the first polymer can be adjusted as appropriate such that the polymer B including the first polymer has the preferred chemical composition set forth above, but is preferably 5 mass% or more, more preferably 10 mass% or more, and even more preferably 20 mass% or more, and is preferably 80 mass% or less, more preferably 70 mass% or less, even more preferably 60 mass% or less, and further preferably 52.5 mass% or less, for example.

In a case in which the first polymer is a particulate polymer having a core-shell structure, a (meth)acrylic acid ester monomer unit may be included in at least either one of the core portion and the shell portion, but it is preferable that a (meth)acrylic acid ester monomer unit is only included in the core portion.

Although no specific limitations are made, methyl methacrylate, n-butyl acrylate, and 2-ethylhexyl acrylate are preferable, and methyl methacrylate and n-butyl acrylate are more preferable as (meth)acrylic acid ester monomers that can form a (meth)acrylic acid ester monomer unit in the first polymer.

The proportional content of aromatic vinyl monomer units in the first polymer can be adjusted as appropriate such that the polymer B including the first polymer has the preferred chemical composition set forth above.

In a case in which the first polymer is a particulate polymer having a core-shell structure, an aromatic vinyl monomer unit may be included in at least either one of the core portion and the shell portion, but it is preferable that an aromatic vinyl monomer unit is only included in the shell portion.

Although no specific limitations are made, styrene is preferable as an aromatic vinyl monomer that can form an aromatic vinyl monomer unit in the first polymer.

The proportional content of cross-linkable monomer units in the first polymer can be adjusted as appropriate such that the polymer B including the first polymer has the preferred chemical composition set forth above.

In a case in which the first polymer is a particulate polymer having a core-shell structure, a cross-linkable monomer unit may be included in at least either one of the core portion and the shell portion, but it is preferable that a cross-linkable monomer unit is only included in the core portion.

Although no specific limitations are made, ethylene glycol dimethacrylate is preferable as a cross-linkable monomer that can form a cross-linkable monomer unit in the first polymer.

==Volume-average particle diameter==

In a case in which the first polymer is a particulate polymer, the volume-average particle diameter of the first polymer is not specifically limited but is preferably 50 nm or more, more preferably 100 nm or more, and even more preferably 200 nm or more, and is preferably 10,000 nm or less, more preferably 5,000 nm or less, and even more preferably 1,000 nm or less, for example.

Note that the "volume-average particle diameter" referred to in the present disclosure is the particle diameter D50 at which, in a particle diameter distribution (by volume) measured by laser diffraction, cumulative volume calculated from a small diameter end of the distribution reaches 50%.

==Glass-transition temperature==

The glass-transition temperature of the first polymer is preferably 30°C or higher, more preferably 40°C or higher, and even more preferably 50°C or higher, and is preferably 120°C or lower, more preferably 115°C or lower, and even more preferably 110°C or lower. When the glass-transition temperature of the first polymer is within any of the specific ranges set forth above, adhesiveness between the separator including the adhesive layer and another battery member can be further improved.

Note that the "glass-transition temperature" of a polymer referred to in the present disclosure can be measured by a method described in the EXAMPLES section of the present specification.

Moreover, in a case in which the first polymer is a particulate polymer having a core-shell structure, for example, the first polymer has two glass-transition temperatures. In this case, it is preferable that at least one of the two glass-transition temperatures is within any of the specific ranges set forth above, and more preferable that both of the glass-transition temperatures are within any of the specific ranges set forth above.

==Degree of swelling in electrolyte solution==

The degree of swelling in electrolyte solution of the first polymer is not specifically limited, but is preferably a factor of 2 or more, more preferably a factor of 4 or more, and even more preferably a factor of 8 or more, and is preferably a factor of 20 or less, more preferably a factor of 18 or less, even more preferably a factor of 15 or less, and further preferably a factor of 12 or less, for example.

Note that the "degree of swelling in electrolyte solution" of a polymer referred to in the present disclosure can be measured by a method described in the EXAMPLES section of the present specification.

==Production method==

The first polymer can be produced by polymerizing a monomer composition containing the monomers described above by a known method without any specific limitations.

For example, a particulate polymer having a core-shell structure that serves as the first polymer can be produced by using monomers for forming a core portion and monomers for forming a shell portion to perform stepwise polymerization in which the ratio of these monomers is changed over time. Specifically, the particulate polymer having a core-shell structure can be produced by continuous, multi-step emulsion polymerization or multi-step suspension polymerization in which a polymer of a preceding step is then covered by a polymer of a succeeding step.

The following describes one example of a case in which the particulate polymer having the core-shell structure described above is obtained by multi-step emulsion polymerization.

In the polymerization, an anionic surfactant such as sodium dodecylbenzenesulfonate or sodium dodecyl sulfate, a non-ionic surfactant such as polyoxyethylene nonylphenyl ether or sorbitan monolaurate, or a cationic surfactant such as octadecylamine acetate, for example, may be used as an emulsifier in accordance with a standard method. Moreover, a peroxide such as t-butyl peroxy-2-ethylhexanoate, potassium persulfate, ammonium persulfate, or cumene peroxide or an azo compound such as 2,2'-azobis(2-methyl-N-(2-hydroxyethyl)propionamide) or 2,2'-azobis(2-amidinopropane) hydrochloride, for example, may be used as a polymerization initiator.

The polymerization procedure involves initially mixing monomers for forming the core portion and the emulsifier, and performing emulsion polymerization as one batch to obtain a particulate polymer that forms the core portion. The particulate polymer having the core-shell structure set forth above can then be obtained by performing polymerization of monomers for forming the shell portion in the presence of the particulate polymer forming the core portion.

In this polymerization, it is preferable that the monomers for forming the polymer of the shell portion are supplied into the polymerization system continuously or divided into a plurality of portions from a viewpoint of partially covering the outer surface of the core portion with the shell portion. As a result of the monomers for forming the polymer of the shell portion being supplied into the polymerization system in portions or continuously, the polymer forming the shell portion can be formed as particles that bond to the core portion such as to form a shell portion that partially covers the core portion.

=Second polymer=

The second polymer that is included in one example of the polymer B is a component that, in the adhesive layer, functions as a binder that can bind together the first polymer described above and can prevent detachment of the first polymer from the adhesive layer.

The second polymer may have a particulate form or may have a form other than a particulate form inside of the non-aqueous secondary battery without any specific limitations.

==Chemical composition==

The second polymer preferably includes, from among the specific polar group-containing monomer units described above, one or more selected from the group consisting of an acid group-containing monomer unit, an epoxy group-containing monomer unit, and a nitrile group-containing monomer unit, and more preferably includes an acid group-containing monomer unit and an epoxy group-containing monomer unit, but is not specifically limited thereto.

Moreover, the second polymer preferably includes a (meth)acrylic acid ester monomer unit other than the specific polar group-containing monomer units described above.

Furthermore, the second polymer may further include other monomer units such as an aromatic vinyl monomer unit and a cross-linkable monomer unit.

The proportional content of acid group-containing monomer units in the second polymer can be adjusted as appropriate such that the polymer B including the second polymer has the preferred chemical composition set forth above, but is preferably 0.01 mass% or more, more preferably 0.5 mass% or more, even more preferably 1 mass% or more, and further preferably 3 mass% or more, and is preferably 10 mass% or less, more preferably 8 mass% or less, and even more preferably 5 mass% or less, for example.

Note that acrylic acid and methacrylic acid are preferable, and acrylic acid is more preferable, for example, as an acid group-containing monomer that can form an acid group-containing monomer unit in the second polymer.

The proportional content of epoxy group-containing monomer units in the second polymer can be adjusted as appropriate such that the polymer B including the second polymer has the preferred chemical composition set forth above, but is preferably 0.01 mass% or more, more preferably 0.5 mass% or more, even more preferably 1 mass% or more, and further preferably 1.7 mass% or more, and is preferably 10 mass% or less, more preferably 8 mass% or less, and even more preferably 3 mass% or less, for example.

Note that allyl glycidyl ether is preferable, for example, as an epoxy group-containing monomer that can form an epoxy group-containing monomer unit in the second polymer.

The proportional content of nitrile group-containing monomer units in the second polymer can be adjusted as appropriate such that the polymer B including the second polymer has the preferred chemical composition set forth above, but can be set as 0.01 mass% or more, can be set as 2 mass% or more, can be set as 5 mass% or more, or can be set as 10 mass% or more, and can be set as 40 mass% or less, can be set as 30 mass% or less, or can be set as 20 mass% or less, for example.

Note that acrylonitrile is preferable, for example, as a nitrile group-containing monomer that can form a nitrile group-containing monomer unit in the second polymer.

The proportional content of (meth)acrylic acid ester monomer units in the second polymer can be adjusted as appropriate such that the polymer B including the second polymer has the preferred chemical composition set forth above, but is preferably 40 mass% or more, more preferably 50 mass% or more, even more preferably 60 mass% or more, and further preferably 70.1 mass% or more, and is preferably 95 mass% or less, more preferably 85 mass% or less, and even more preferably 75 mass% or less, for example.

Although no specific limitations are made, n-butyl acrylate and 2-ethylhexyl acrylate are preferable, and 2-ethylhexyl acrylate is more preferable as a (meth)acrylic acid ester monomer that can form a (meth)acrylic acid ester monomer unit in the second polymer.

The proportional content of aromatic vinyl monomer units in the second polymer can be adjusted as appropriate such that the polymer B including the second polymer has the preferred chemical composition set forth above.

Although no specific limitations are made, styrene is preferable as an aromatic vinyl monomer that can form an aromatic vinyl monomer unit in the second polymer.

The proportional content of cross-linkable monomer units in the second polymer can be adjusted as appropriate such that the polymer B including the second polymer has the preferred chemical composition set forth above.

Although no specific limitations are made, allyl methacrylate is preferable as a cross-linkable monomer that can form a cross-linkable monomer unit in the second polymer.

==Volume-average particle diameter==

In a case in which the second polymer is a particulate polymer, the volume-average particle diameter of the second polymer is not specifically limited, but is preferably 10 nm or more, more preferably 50 nm or more, and even more preferably 100 nm or more, and is preferably 1,000 nm or less, more preferably 500 nm or less, even more preferably 300 nm or less, and further preferably 180 nm or less, for example.

==Glass-transition temperature==

The glass-transition temperature of the second polymer is preferably -80°C or higher, more preferably -60°C or higher, and even more preferably -50°C or higher, and is preferably 5°C or lower, more preferably -5°C or lower, and even more preferably -15°C or lower.

==Degree of swelling in electrolyte solution==

The degree of swelling in electrolyte solution of the second polymer is not specifically limited, but is preferably a factor of 1.1 or more, more preferably a factor of 1.2 or more, and even more preferably a factor of 1.3 or more, and is preferably a factor of 5 or less, more preferably a factor of 3 or less, and even more preferably a factor of 2 or less, for example.

==Production method==

The second polymer can be produced through polymerization of a monomer composition containing the monomers described above, carried out in an aqueous solvent such as water, for example. The proportional content of each monomer in the monomer composition can be set in accordance with the proportional content of each repeating unit (monomer unit) in the organic particles.

The polymerization method of the second polymer is not specifically limited and may be solution polymerization, suspension polymerization, bulk polymerization, emulsion polymerization, or the like, for example. Moreover, the polymerization reaction may be addition polymerization such as ionic polymerization, radical polymerization, or living radical polymerization. An emulsifier, dispersant, polymerization initiator, or the like used in polymerization may be the same as typically used and the amount thereof may also be the same as typically used.

=Content=

The content of the second polymer among the polymer B can be adjusted as appropriate such that the polymer B has the preferred chemical composition set forth above, but is preferably 1 part by mass or more, more preferably 5 parts by mass or more, even more preferably 10 parts by mass or more, and further preferably 15 parts by mass or more relative to 100 parts by mass of the first polymer, and is preferably 50 parts by mass or less, more preferably 30 parts by mass or less, and even more preferably 25 parts by mass or less relative to 100 parts by mass of the first polymer.

Note that in a case in which the adhesive layer contains non-conductive particles, for example, the polymer B that is contained in the adhesive layer may further include a third polymer in addition to the first polymer and the second polymer described above. The third polymer is a component that can function well as a viscosity modifier in a slurry composition for forming the adhesive layer containing non-conductive particles, for example. Moreover, the third polymer is a component that can function well as a dispersant that disperses components such as the non-conductive particles in the aforementioned slurry composition.

A nitrogen-based polymer can, for example, be used as the third polymer. The nitrogen-based polymer is a water-soluble polymer (i.e., a polymer that dissolves in water) that includes a nitrogen-containing monomer unit. Examples of nitrogen-containing monomers that can form a nitrogen-containing monomer unit include acrylamide, methacrylamide, and N-hydroxyethylacrylamide. The proportional content of nitrogen-containing monomer units in the nitrogen-based polymer is not less than 50 mass% and not more than 100 mass%, for example, and is preferably 90 mass% or more. The nitrogen-based polymer may include a (meth)acrylic acid unit or the like, for example, as a monomer unit other than a nitrogen-containing monomer unit in an amount within a range that enables the polymer to function as a viscosity modifier and/or dispersant.

The nitrogen-based polymer can be produced by polymerizing a composition containing the above-described monomers such as a nitrogen-containing monomer by a known method in an aqueous solvent such as water, for example.

The weight-average molecular weight of the nitrogen-based polymer is not specifically limited, but is preferably 50,000 or more, more preferably 80,000 or more, and even more preferably 100,000 or more, and is preferably 600,000 or less, more preferably 500,000 or less, and even more preferably 400,000 or less, for example.

The content of the third polymer such as the nitrogen-based polymer described above in the adhesive layer can be set as not less than 0.5 parts by mass and not more than 5 parts by mass relative to 100 parts by mass of the non-conductive particles, for example, and is preferably 1.5 parts by mass or more.

=Other example of polymer B=

Although it is preferable that the first polymer and the second polymer that the one example of the polymer B described above at least includes each include a specific polar group-containing monomer described above and a (meth)acrylic acid ester monomer unit, the present disclosure is not limited thereto.

For example, another example of the polymer B may include a polymer including a fluorine-containing monomer unit as a first polymer and may include a cyanoethyl polyvinyl alcohol as a second polymer.

Any of the fluoropolymers given as examples of other components that can be used in the previously described positive electrode mixed material layer, for example, can be used as the polymer including a fluorine-containing monomer unit.

Moreover, the cyanoethyl polyvinyl alcohol is a polymer obtained by performing cyanoethylation by a known method with respect to a polyvinyl alcohol obtained through saponification of polyvinyl acetate by a known method.

The cyanoethyl polyvinyl alcohol includes, as the specific polar group-containing monomer units described above, a vinyl alcohol unit, which is a hydroxyl group-containing monomer, and a cyanoethylated vinyl alcohol unit, which is a nitrile group-containing monomer unit.

Note that the cyanoethylation rate, weight-average molecular weight (Mw), and so forth of the cyanoethyl polyvinyl alcohol can be adjusted as appropriate within ranges that yield the desired effects according to the present disclosure.

In a case in which a polymer including a fluorine-containing monomer unit (fluoropolymer) and a cyanoethyl polyvinyl alcohol are used in combination as the polymer B, a mass ratio of the fluoropolymer and the cyanoethyl polyvinyl alcohol (fluoropolymer/cyanoethyl polyvinyl alcohol) is not specifically limited, but can be set as 60/40 or more, or can be set as 70/30 or more, for example, and can be set as 99/1 or less, or can be set as 95/5 or less, for example.

-Ratio of coverage by polymer B-

In plan view of the adhesive layer formed on the separator substrate, part of the surface of the adhesive layer is covered by the polymer B.

The ratio of coverage of the adhesive layer by the polymer B is required to be 3% or more, and is preferably 5% or more, more preferably 10% or more, and even more preferably 12% or more. Moreover, the ratio of coverage of the adhesive layer by the polymer B is required to be 70% or less, and is preferably 65% or less, more preferably 63% or less, even more preferably 52% or less, further preferably 50% or less, and even further preferably 30% or less. When the ratio of coverage of the adhesive layer by the polymer B is not less than any of the lower limits set forth above, heat shrinkage resistance of the separator can be improved because good adhesion can be achieved between the separator and another battery member such as the positive electrode, for example, inside of the non-aqueous secondary battery. On the other hand, when the ratio of coverage of the adhesive layer by the polymer B is not more than any of the upper limits set forth above, restriction of movement of the electrolyte solution due to an excessive amount of the polymer B can be inhibited, and sufficiently high electrolyte solution mobility of the non-aqueous secondary battery can be ensured.

Note that the ratio of coverage of the adhesive layer by the polymer B can be adjusted through the coating weight of a slurry composition for an adhesive layer used to form the adhesive layer on the separator substrate or the mass per unit area of the adhesive layer formed after drying of this slurry composition, for example.

{Other components}

The adhesive layer may further contain other components besides the polymer B described above within a range that yields the desired effects according to the present disclosure.

For example, non-conductive particles can be used as another component that can be contained in the adhesive layer.

-Non-conductive particles-

The non-conductive particles are particles that are not electrically conductive and that maintain a particulate form in the electrolyte solution of the non-aqueous secondary battery. Moreover, the non-conductive particles are a material that can impart heat shrinkage resistance to the separator.

Note that although the adhesive layer included in the separator of the presently disclosed non-aqueous secondary battery may or may not contain non-conductive particles without any specific limitations, it is preferable that the adhesive layer does not contain non-conductive particles from a viewpoint of ensuring sufficiently high adhesiveness as an adhesive layer.

The non-conductive particles are not specifically limited so long as they are electrochemically stable particles that are stably present in the environment of use of the non-aqueous secondary battery, and inorganic particles can be used, for example.

=Non-conductive inorganic particles=

Examples of inorganic particles that are not electrically conductive (non-conductive inorganic particles) include particles of oxides such as aluminum oxide (alumina), hydrous aluminum oxide (boehmite ($AlOOH$)), gibbsite ($Al(OH)_3$), silicon oxide, magnesium oxide (magnesia), magnesium hydroxide, calcium oxide, titanium oxide (titania), barium titanate ($BaTiO_3$), ZrO, and alumina-silica complex oxide; particles of nitrides such as aluminum nitride and boron nitride; particles of covalently bonded crystals such as silicon and diamond; particles of sparingly soluble ionic crystals such as barium sulfate, calcium fluoride, and barium fluoride; and fine particles of clays such as talc and montmorillonite. These particles may be subjected to element substitution, surface treatment, solid solution treatment, or the like as necessary.

One of the types of non-conductive inorganic particles described above may be used individually, or two or more of the types of non-conductive inorganic particles described above may be used in combination. The non-conductive particles are preferably aluminum oxide or hydrous aluminum oxide, and are more preferably aluminum oxide.

=Volume-average particle diameter=

Although no specific limitations are placed on the volume-average particle diameter of the non-conductive particles, such as the above-described non-conductive inorganic particles, so long as the desired effects according to the present disclosure are obtained, the volume-average particle diameter of the non-conductive particles is preferably 50 nm or more, and more preferably 300 nm or more, and is preferably 1,200 nm or less, and more preferably 800 nm or less, for example.

=Mass ratio of non-conductive particles and polymer B=

In a case in which the adhesive layer contains non-conductive particles, a mass ratio of the non-conductive particles and the polymer B (non-conductive particles/polymer B) is preferably 2/1 or more, more preferably 3/1 or more, and even more preferably 4/1 or more, and is preferably 50/1 or less, and more preferably 30/1 or less, for example. When the mass ratio of the non-conductive particles and the polymer B (non-conductive particles/polymer B) is not less than any of the lower limits set forth above, heat shrinkage resistance of the separator can be further improved. On the other hand, when the mass ratio of the non-conductive particles and the polymer B (non-conductive particles/polymer B) is not more than any of the upper limits set forth above, sufficiently high adhesiveness between the separator and another battery member can be ensured.

<<Heat-resistant layer>>

The separator preferably further includes a heat-resistant layer formed on the separator substrate in addition to the adhesive layer described above. Through the separator further including a heat-resistant layer, heat shrinkage resistance of the separator can be further improved.

The heat-resistant layer is not specifically limited and may contain non-conductive particles, for example. The heat-resistant layer may also contain additives such as a binder in addition to the non-conductive particles. The inclusion of at least non-conductive particles in the heat-resistant layer can further improve electrolyte solution mobility of the non-aqueous secondary battery because this means that the heat-resistant layer is a layer having a porous structure (also referred to as a "porous membrane").

Any of the inorganic particles given as examples of non-conductive particles that can be contained in the previously described adhesive layer, for example, can be used as the non-conductive particles. Moreover, known additives can be used without any specific limitations as additives such as a binder.

The heat-resistant layer can be formed by applying, onto the separator substrate, a slurry composition that has the non-conductive particles and optional additives dispersed or dissolved in a solvent, and then drying this slurry composition, for example. Known methods can be adopted without any specific limitations as the application method and drying method of the slurry composition on the substrate.

Moreover, a commercially available product such as BM-2000M produced by Zeon Corporation, for example, can be used as the slurry composition.

Note that a heat-resistant layer may be formed at just one side of the separator substrate or heat-resistant layers may be formed at both sides of the separator substrate. However, from a viewpoint of ensuring sufficiently high cell windability of the non-aqueous secondary battery, it is preferable that a heat-resistant layer is formed at just one side of the separator substrate, and more preferable that a heat-resistant layer is formed only on a surface that is at a positive electrode-side of the separator substrate inside of the non-aqueous secondary battery.

Furthermore, the heat-resistant layer is preferably formed between the separator substrate and the adhesive layer from a viewpoint of sufficiently ensuring adhesiveness between the separator and another member.

<<Production method of separator>>

The separator that is included in the presently disclosed non-aqueous secondary battery can be produced by forming the adhesive layer on the separator substrate.

The separator included in the presently disclosed non-aqueous secondary battery may be produced through a step of applying a slurry composition for an adhesive layer containing the above-described polymer B onto the separator substrate (application step) and a step of drying the slurry composition for an adhesive layer that has been applied onto the separator substrate (drying step), for example, but is not specifically limited to being produced in this manner.

The slurry composition for an adhesive layer is a composition in the form of a slurry having water or the like as a dispersion medium that can further contain other components such as non-conductive particles in addition to the above-described polymer B.

The slurry composition for an adhesive layer can be produced by, for example, dissolving or dispersing the above-described polymer B and other optional components (for example, non-conductive particles) in a solvent such as water and/or an organic solvent. Specifically, the slurry composition for an adhesive layer can be produced by mixing the components and the solvent using a mixer such as a ball mill, a sand mill, a bead mill, a pigment disperser, a grinding machine, an ultrasonic disperser, a homogenizer, a planetary mixer, or a FILMIX as necessary.

Note that a solvent used in production of the above-described polymer B may be used as the solvent that is used in production of the slurry composition for an adhesive layer.

{Application step}

The slurry composition for an adhesive layer can be applied onto the separator substrate by any commonly known method without any specific limitations. Specific examples of application methods that can be used include doctor blading, dip coating, reverse roll coating, direct roll coating, gravure coating, extrusion coating, and brush coating.

{Drying step}

The slurry composition for an adhesive layer on the separator substrate can be dried by any commonly known method without any specific limitations. Examples of drying methods that can be used include drying by warm, hot, or low-humidity air; drying in a vacuum; and drying by irradiation with infrared light, electron beams, or the like. By drying the slurry composition for an adhesive layer on the substrate in this manner, it is possible to obtain a separator (adhesive layer-equipped separator) having an adhesive layer formed on the separator substrate.

The separator substrate that is used in the separator production method described above may be a separator having the previously described heat-resistant layer formed on at least one side of a separator substrate (also referred to as a "heat-resistant layer-equipped separator").

By performing the above-described application step and drying step with respect to a surface at a heat-resistant layer-side of the heat-resistant layer-equipped separator, it is possible to obtain a separator that includes a heat-resistant layer and an adhesive layer on a separator substrate and that has the heat-resistant layer interposed between the separator substrate and the adhesive layer.

<Mass per unit area of adhesive layer>

The mass per unit area of the adhesive layer formed on the substrate can be adjusted as appropriate in accordance with the desired ratio of coverage by the polymer B, but is preferably 0.05 g/m$^2$ or more, and more preferably 0.10 g/m$^2$ or more, and is preferably 0.70 g/m$^2$ or less, more preferably 0.45 g/m$^2$ or less, and even more preferably 0.40 g/m$^2$ or less, for example.

<Production method of non-aqueous secondary battery>

The presently disclosed non-aqueous secondary battery can be produced by, for example, stacking the above-described positive electrode and negative electrode with the separator in-between, performing rolling, folding, or the like of the resultant laminate, as necessary, to place the laminate in a battery container, injecting the electrolyte solution into the battery container, and sealing the battery container. From a viewpoint of further improving electrolyte solution mobility of the non-aqueous secondary battery, it is preferable that a surface at the adhesive layer-side of the separator faces the positive electrode such that the adhesive layer and the positive electrode mixed material layer are in contact. In order to prevent pressure increase inside the battery and occurrence of overcharging or overdischarging, an expanded metal; an overcurrent preventing device such as a fuse or a PTC device; or a lead plate may be provided in the battery container as necessary. The shape of the battery may, for example, be a coin type, a button type, a sheet type, a cylinder type, a prismatic type, or a flat type.

EXAMPLES

The following provides a more specific description of the present disclosure based on examples. However, the present disclosure is not limited to the following examples. In the following description, "%" and "parts" used in expressing quantities are by mass, unless otherwise specified.

Moreover, in the case of a polymer that is produced through copolymerization of a plurality of types of monomers, the proportion constituted by a repeating unit (monomer unit) that is formed through polymerization of a given monomer in the polymer is normally, unless otherwise specified, the same as the ratio (charging ratio) of the given monomer among all monomers used in polymerization of the polymer.

In the examples and comparative examples, the following methods were used to measure and evaluate iodine value, weight-average molecular weight, proportion of structural units derived from 1,3-butadiene polymerized by 1,2-bonding, volume-average particle diameter, glass-transition temperature, degree of swelling in electrolyte solution, mass per unit area, density, void fraction, ratio of coverage of an adhesive layer by a polymer, adhesiveness between an electrode and a separator after hot pressing, and also injectability, cell windability, cycle characteristics, and rate characteristics of a lithium ion secondary battery, and heat shrinkage resistance of a separator.

<Iodine value of polymer>

The iodine value of a polymer was measured in accordance with JIS K6235(2006).

<Weight-average molecular weight>

A polymer was dissolved in LiBr-dimethylformamide (DMF) solution of 10 mM in concentration such as to have a solid content concentration of 0.1 wt% and was then subjected to gel permeation chromatography (GPC) under the following measurement conditions to measure the weight-average molecular weight (Mw).

<<Measurement conditions>>

Apparatus: HLC-8320GPC (product name) produced by Tosoh Corporation
Column: TSKgel $\alpha$-M (product name) × 2 columns (7.8 mm I.D. × 30 cm × 2 columns) produced by Tosoh Corporation
Eluent: N,N-dimethylformamide (containing lithium bromide in concentration of 10 mM)
Flow rate: 1 mL/min
Injection volume: 10 $\mu$L
Column temperature: 40°C
Detector: Differential refractive index detector (RI)
Standard substance: Standard polystyrene kit (produced by Tosoh Corporation; product name: PSt Quick Kit-H)

<Proportion of structural units derived from 1,3-butadiene polymerized by 1,2-bonding>

A polymer A was vacuum dried at 60°C for 24 hours and was then subjected to $^1$H-NMR measurement to determine the proportion constituted by structural units derived from 1,3-butadiene polymerized by 1,2-bonding among all repeating units of the polymer.

<Volume-average particle diameter>

The volume-average particle diameter of a particulate polymer was measured by laser diffraction/scattering. Specifically, a water dispersion (adjusted to solid content concentration of 0.1 mass%) containing a measurement subject (particulate polymer) was taken to be a sample. In a particle diameter distribution (by volume) measured using a laser diffraction/scattering particle size analyzer (produced by Beckman Coulter, Inc.; product name: LS-13 320), the particle diameter D50 at which cumulative volume calculated from a small diameter end of the distribution reached 50% was taken to be the volume-average particle diameter.

<Glass-transition temperature of polymer>

A powdered sample obtained by drying a water dispersion containing a polymer at a temperature of 25°C for 48 hours was taken to be a measurement sample. The measurement sample was weighed into an aluminum pan in an amount of 10 mg and was then measured by a differential scanning calorimeter (produced by SII NanoTechnology Inc.; product name: EXSTAR DSC6220) under conditions prescribed in JIS Z8703 with a measurement temperature range of -100°C to 200°C and a heating rate of 20°C/min to obtain a differential scanning calorimetry (DSC) curve. Note that an empty aluminum pan was used as a reference. In the heating process, the temperature at which a derivative signal (DDSC) exhibited a peak was determined as the glass-transition temperature (°C). Note that since multiple peaks were measured, the temperature at which a peak of large displacement was exhibited was taken to be the glass-transition temperature of the polymer.

<Degree of swelling in electrolyte solution>

A water dispersion containing a particulate polymer was dried at 25°C and was subsequently vacuum dried at 60°C for 12 hours to obtain a test specimen for measurement of the degree of swelling in electrolyte solution of the particulate polymer. The mass of this test specimen (pre-immersion mass) was measured. Thereafter, the test specimen was immersed in electrolyte solution at a temperature of 60°C for 72 hours. The immersed test specimen was then pulled up, electrolyte solution was wiped off, and the mass of the test specimen (post-immersion mass) was measured soon thereafter. A value of (post-immersion mass)/(pre-immersion mass) [factor] was taken to be the degree of swelling.
Note that a $LiPF_6$ solution of 1.0 M in concentration (solvent: mixed solvent of ethylene carbonate (EC)/ethyl methyl carbonate (EMC) = 3/7 (volume ratio); additive: containing 2 volume% (solvent ratio) of vinylene carbonate) was used as the electrolyte solution.

<Mass per unit area>

<Mass per unit area M (mg/cm$^2$)>

A positive electrode was punched out with a specific area (S (cm$^2$)), and the weight W (mg) thereof was measured. In the same manner, aluminum foil serving as a current collector was punched out with a specific area (S (cm$^2$)), and the weight W0 (mg) thereof was measured. The mass per unit area was then calculated by the following formula.

$$M = (W - W0)/S \ (mg/cm^2)$$

<Density d (g/cm$^3$)>

The thickness t (cm) of a positive electrode obtained through roll pressing of a positive electrode web was measured. The density d (g/cm$^3$) was calculated by the following formula from the measured thickness using the thickness t0 (cm) of aluminum foil serving as a current collector and the calculated mass per unit area M (mg/cm$^2$).

$$d = (M/1000)/(t - t0) \ (g/cm^3)$$

<Void fraction>

A positive electrode cut out with a specific area was measured in accordance with JIS R 1655, and the cumulative pore volume Vp was calculated as the void volume in the positive electrode mixed material layer. The thickness and area of the positive electrode mixed material layer were multiplied to determine the apparent volume Va of the positive electrode mixed material layer, and then a value calculated based on the following formula was taken to be the void fraction φ of the positive electrode mixed material layer.

$$\varphi = Vp/Va \times 100(\%)$$

<Ratio of coverage of adhesive layer by polymer>

The surface of an adhesive layer of an adhesive layer-equipped separator produced in each example or comparative example was observed using a field emission scanning electron microscope (FE-SEM; JSM-7800 Prime produced by JEOL Ltd.; detector: BED-C; accelerating voltage: 5 kV; magnification: ×2,000) with a viewing field of 93 μm in height and 124 μm in width. Note that 5 viewing fields were observed for each of a front surface and a rear surface of the adhesive layer-equipped separator.

Thereafter, binarization was performed with respect to each of the 10 viewing fields that were observed, and the proportion of area occupied by polymer among the area of the overall viewing field was determined. Specifically, the binarization (threshold value 38) was performed using image analysis software (WinROOF produced by Mitani Corporation) with emphasis conditions set as "Brightness: -30" and "Contrast: +70", and with a filter set as 7×7 with two threshold values. The proportion occupied by the total area of polymer per unit area of the surface of the adhesive layer in plan view of the surface of the adhesive layer (i.e., the ratio of coverage by the polymer (%)) was determined from an average for the 10 SEM image viewing fields that were obtained.

<Adhesiveness between positive electrode and separator after hot pressing>

A positive electrode and an adhesive layer-equipped separator produced in each example or comparative example were each cut out as 10 mm in width and 50 mm in length. The positive electrode and the adhesive layer-equipped separator were then stacked and were pressed by roll pressing under conditions of a temperature of 70°C, a load of 5 kN/m, and a pressing rate of 30 m/min to obtain a joined product in which the positive electrode and the adhesive layer-equipped separator were joined together.

The obtained joined product was placed with the surface at the current collector-side of the positive electrode facing downward, and cellophane tape was affixed to the surface of the positive electrode. Tape prescribed by JIS Z1522 was used as the cellophane tape. Moreover, the cellophane tape was fixed to a horizontal test stage in advance. Thereafter, one end of the adhesive layer-equipped separator was pulled vertically upward with a pulling speed of 50 mm/min to peel off the separator, and the stress during this peeling was measured.

The stress measurement described above was performed three times for a joined product of a positive electrode and an adhesive layer-equipped separator, an average value for the stress was determined, and the determined average value was taken to be the peel strength (N/m).

The calculated peel strength was used to evaluate adhesiveness between a positive electrode and a separator after hot pressing by the following standard. A larger peel strength indicates that there is higher adhesiveness between a positive electrode and a separator after hot pressing and that better adhesive between a positive electrode and a separator is possible even inside a non-aqueous secondary battery.

A: Peel strength of 10 N/m or more.
B: Peel strength of not less than 6 N/m and less than 10 N/m
C: Peel strength of not less than 3 N/m and less than 6 N/m
D: Peel strength of less than 3 N/m

<Injectability>

A positive electrode, a negative electrode, and an adhesive layer-equipped separator produced in each example or comparative example were respectively cut out as 6.5 cm × 13.0 cm, 7.0 cm × 13.5 cm, and 7.5 cm × 14.0 cm.

Next, stacking was performed in an order of positive electrode/adhesive layer-equipped separator/negative electrode with the adhesive layer of the separator facing the positive electrode-side, and then pressing was performed by roll pressing under conditions of a temperature of 70°C, a load of 5 kN/m, and a pressing rate of 30 m/min to obtain a joined product in which the positive electrode, the adhesive layer-equipped separator, and the negative electrode were joined together. The obtained joined product was housed in an aluminum laminate sheet casing of 9.0 cm $\times$ 18.0 cm. Thereafter, 500 $\mu$L of electrolyte solution was injected so as to produce a lithium ion secondary battery. Note that a $LiPF_6$ solution of 1.0 M in concentration (solvent: mixed solvent of ethylene carbonate (EC)/ethyl methyl carbonate (EMC) = 3/7 (volume ratio); additive: containing 2 volume% (solvent ratio) of vinylene carbonate) was used as the electrolyte solution. The inside of the produced lithium ion secondary battery was depressurized to -95 kPa, this state was maintained for 1 minute, and then heat sealing was performed to obtain a test sample. This test sample was disassembled 5 minutes later, and the impregnation state of electrolyte solution in the positive electrode was visually checked. An evaluation was made by the following standard. A greater portion impregnated with electrolyte solution in the positive electrode indicates higher electrolyte solution injectability. Moreover, higher electrolyte solution injectability indicates that a lithium ion secondary battery has better electrolyte solution mobility.

A: Entire surface of positive electrode impregnated with electrolyte solution
B: Portion of less than 4 cm2 remains unimpregnated with electrolyte solution in positive electrode (excluding case in which entire surface is impregnated)
C: Portion of not less than 4 cm2 and less than 8 cm2 remains unimpregnated with electrolyte solution in positive electrode
D: Portion of 8 cm2 or more remains unimpregnated with electrolyte solution in positive electrode

<Cell windability>

A positive electrode, a negative electrode, and an adhesive layer-equipped separator produced in each example or comparative example were respectively cut out as 6.5 cm $\times$ 13.0 cm, 7.0 cm $\times$ 13.5 cm, and 7.5 cm $\times$ 14.0 cm. Next, stacking was performed in an order of positive electrode/adhesive layer-equipped separator/negative electrode, and then pressing was performed by roll pressing under conditions of a temperature of 70°C, a load of 5 kN/m, and a pressing rate of 30 m/min to obtain a joined product in which the positive electrode, the adhesive layer-equipped separator, and the negative electrode were joined together. This joined product was wound around rods of different diameters, and the occurrence or absence of cracking of the positive electrode mixed material layer or the adhesive layer was evaluated. When winding can be performed with respect to a rod of smaller diameter without cracking of the positive electrode mixed material layer or adhesive layer, this indicates that a cell of a lithium ion secondary battery has higher flexibility and better windability. Cell windability was evaluated by the following standard in accordance with the diameter of a thinnest rod with which cracking of the positive electrode mixed material layer or adhesive layer did not occur.

A: No cracking even upon winding around rod of 1.15 mm in diameter
B: No cracking even upon winding around rod of 1.40 mm in diameter
C: No cracking even upon winding around rod of 2.00 mm in diameter
D: No cracking even upon winding around rod of 3.00 mm in diameter

<Cycle characteristics>

A lithium ion secondary battery produced in each example or comparative example was left at rest at a temperature of 25°C for 5 hours after injection of electrolyte solution. Next, the lithium ion secondary battery was charged to a cell voltage of 3.65 V (cell voltage of 3.40 V in Example 10) by a 0.2C constant-current method at a temperature of 25°C and was then subjected to 12 hours of aging at a temperature of 60°C. The lithium ion secondary battery was then discharged to a cell voltage of 3.00 V by a 0.2C constant-current method at a temperature of 25°C. Thereafter, CC-CV charging (upper limit cell voltage of 4.20 V with exception of Example 9 (upper limit cell voltage of 4.35 V) and Example 10 (upper limit cell voltage of 3.60 V)) was performed by a 0.2C constant-current method and CC discharging was performed to 3.00 V by a 0.2C constant-current method. This charging and discharging at 0.2C was repeated three times.
The lithium ion secondary battery was subsequently subjected to 100 cycles of a charge/discharge operation with a cell voltage of 4.20 V to 3.00 V and a charge/discharge rate of 1.0C (performed with cell voltage of 4.35 V to 3.00 V at 1.0C in Example 9 and with cell voltage of 3.60 V to 3.00 V at 1.0C in Example 10) in an environment having a temperature of 25°C. The discharge capacity of the 1st cycle was defined as X1 and the discharge capacity of the 100th cycle was defined as X2. A capacity maintenance rate expressed by $\Delta C = (X2/X1) \times 100(\%)$ was determined using the discharge capacity X1 and the discharge capacity X2 and was then evaluated by the following standard. A larger value for the capacity maintenance rate $\Delta C$ indicates that a lithium ion secondary battery has better cycle characteristics.

A: Capacity maintenance rate ∆C of 93% or more

B: Capacity maintenance rate ∆C of not less than 90% and less than 93%

C: Capacity maintenance rate ∆C of not less than 87% and less than 90%

D: Capacity maintenance rate ∆C of less than 87%

<Low-temperature rate characteristics>

A lithium ion secondary battery produced in each example or comparative example was left at rest at a temperature of 25°C for 5 hours after injection of electrolyte solution. Next, the lithium ion secondary battery was charged to a cell voltage of 3.65 V (cell voltage of 3.40 V in Example 10) by a 0.2C constant-current method at a temperature of 25°C and was then subjected to 12 hours of aging at a temperature of 60°C. The lithium ion secondary battery was then discharged to a cell voltage of 3.00 V by a 0.2C constant-current method at a temperature of 25°C. Thereafter, CC-CV charging (upper limit cell voltage of 4.20 V with exception of Example 9 (upper limit cell voltage of 4.35 V) and Example 10 (upper limit cell voltage of 3.60 V)) was performed with a 0.2C constant current, and then CC discharging was performed to a cell voltage of 3.00 V with a 0.2C constant current. This charging and discharging at 0.2C was repeated three times.

Next, 0.2C constant-current charging and discharging was performed between cell voltages of 4.2 V and 3.00 V (between cell voltages of 4.35 V and 3.00 V in Example 9 and between cell voltages of 3.60 V and 3.00 V in Example 10) in an environment having a temperature of 25°C, and the discharge capacity at this time was defined as C0. Thereafter, CC-CV charging was performed in the same manner with a 0.2C constant current, discharging was then performed to 3.0 V with a 0.5C constant current in an environment having a temperature of -10°C, and the discharge capacity at this time was defined as C1. A capacity maintenance rate expressed by $\Delta C = (C1/C0) \times 100(\%)$ was determined as a rate characteristic and was evaluated by the following standard. A larger value for the capacity maintenance rate ∆C indicates higher discharge capacity at high current in a low temperature environment and lower internal resistance.

A: Capacity maintenance rate ∆C of 70% or more

B: Capacity maintenance rate ∆C of not less than 60% and less than 70%

C: Capacity maintenance rate ∆C of not less than 50% and less than 60%

D: Capacity maintenance rate ∆C of less than 50%

<Heat shrinkage resistance of separator in electrolyte solution>

An adhesive layer-equipped separator produced in each example or comparative example was cut out as a square of 6 cm in width by 6 cm in length, and then a square having a side length of 5 cm was drawn in an inner part of this cut-out square. In addition, a produced positive electrode was cut out as 5 cm × 5 cm, was then stacked with the adhesive layer-equipped separator, and was housed inside an aluminum laminate sheet casing of 9.0 cm × 9.0 cm. Thereafter, 400 μL of electrolyte solution was injected, the internal pressure was lowered to -95 kPa, this state was maintained for 1 minute, and then heat sealing was performed to obtain a test sample. Note that a $LiPF_6$ solution of 1.0 M in concentration (solvent: mixed solvent of ethylene carbonate (EC)/ethyl methyl carbonate (EMC) = 3/7 (volume ratio); additive: containing 2 volume% (solvent ratio) of vinylene carbonate) was used as the electrolyte solution. Once 12 hours has passed from production of the test sample, the test sample was hot pressed for 20 minutes, together with the laminate packing, using a flat plate press with a temperature of 80°C and a load of 2.5 kN. The post-pressing test sample was placed in a 130°C oil bath and was left therein for 1 hour. The area change of the square drawn in the inner part was subsequently calculated (= {(area of square before being left - area of square after being left)/area of square before being left} × 100%) as a heat shrinkage rate and was evaluated by the following standard. A smaller heat shrinkage rate indicates that a separator has better heat shrinkage resistance in electrolyte solution.

A: Heat shrinkage rate of less than 10%
B: Heat shrinkage rate of not less than 10% and less than 18%
C: Heat shrinkage rate of not less than 18% and less than 27%
D: Heat shrinkage rate of 27% or more

(Production Example 1-1: Production of polymer A1)

A reactor having an internal capacity of 10 L was charged with 100 parts of deionized water, 35 parts of acrylonitrile as a (meth)acrylonitrile monomer, and 65 parts of 1,3-butadiene as an aliphatic conjugated diene monomer, and then 2 parts of potassium oleate as an emulsifier, 0.1 parts of potassium phosphate as a stabilizer, and 0.8 parts of tert-dodecyl mercaptan (TDM) as a molecular weight modifier were added. Emulsion polymerization was performed at a temperature of 5°C in the presence of 0.35 parts of potassium persulfate as a polymerization initiator to cause copolymerization of acrylonitrile and 1,3-butadiene.

At the point at which the polymerization conversion rate reached 85%, 0.2 parts of hydroxylamine sulfate was added per 100 parts of monomer to stop polymerization. Next, heating was performed and then steam distillation was performed at approximately 90°C under reduced pressure to collect residual monomer. Thereafter, 0.1 parts of dibutylhydroxytoluene (BHT) as a substituted phenol was added to yield a water dispersion of a copolymer of acrylonitrile and 1,3-butadiene that was a precursor of a polymer A1.

A 25 mass% aqueous solution of calcium chloride ($CaCl_2$) was added as a coagulant under stirring in an amount such as to be 3 parts relative to 100 parts of polymer solid content in the obtained water dispersion so as to cause coagulation of the polymer in the water dispersion. Thereafter, filtration was performed, and then 50 equivalents of deionized water was passed through the obtained polymer to perform water washing. The polymer was subsequently dried under reduced pressure at a temperature of 90°C to obtain a precursor of a polymer A1.

Next, the precursor of the polymer A1 was hydrogenated by adopting an oil-layer hydrogenation method as the hydrogenation method. The precursor of the polymer A1 was dissolved in acetone such as to have a concentration of 12% and thereby obtain an acetone solution of the precursor of the polymer A1 as a hydrogenation subject. This acetone solution was loaded into an autoclave, 500 ppm of palladium/silica ($Pd/SiO_2$) as a catalyst was added relative to 100% of the precursor of the polymer A1 serving as a hydrogenation subject, and a hydrogenation reaction was subsequently performed at a hydrogen pressure of 3.0 MPa and a temperature of 60°C for 6 hours to yield a hydrogenation reaction product. Once the hydrogenation reaction had ended, the palladium/silica was filtered off, and acetone serving as a solvent was removed under reduced pressure to obtain a polymer. The obtained polymer A1 was dissolved in a specific amount of N-methylpyrrolidone (NMP) to obtain an NMP solution of the polymer A1 having a solid content concentration of 8%.

The obtained polymer A1 was used to measure the iodine value, weight-average molecular weight, and proportion of structural units resulting from polymerization of 1,3-butadiene by 1,2-bonding. The results are shown in Table 1.

(Production Example 1-2: Production of polymer A2)

A reactor having an internal capacity of 10 L was charged with 100 parts of deionized water, 35 parts of acrylonitrile as a (meth)acrylonitrile monomer, and 65 parts of 1,3-butadiene as an aliphatic conjugated diene monomer, and then 2 parts of potassium oleate as an emulsifier, 0.1 parts of potassium phosphate as a stabilizer, and 0.25 parts of tert-dodecyl mercaptan (TDM) as a molecular weight modifier were added. Emulsion polymerization was performed at a temperature of 5°C in the presence of 0.35 parts of potassium persulfate as a polymerization initiator to cause copolymerization of acrylonitrile and 1,3-butadiene.

At the point at which the polymerization conversion rate reached 95%, 0.2 parts of hydroxylamine sulfate was added per 100 parts of monomer to stop polymerization. Next, heating was performed and then steam distillation was performed at approximately 90°C under reduced pressure to collect residual monomer. Thereafter, 0.1 parts of dibutylhydroxytoluene (BHT) as a substituted phenol was added to yield a water dispersion of a copolymer of acrylonitrile and 1,3-butadiene that was a precursor of a polymer A2.

A 25 mass% aqueous solution of calcium chloride ($CaCl_2$) was added as a coagulant under stirring in an amount such as to be 3 parts relative to 100 parts of polymer solid content in the obtained water dispersion so as to cause coagulation of the polymer in the water dispersion. Thereafter, filtration was performed, and then 50 equivalents of deionized water was passed through the obtained polymer to perform water washing. The polymer was subsequently dried under reduced pressure at a temperature of 90°C to obtain a precursor of a polymer A2.

Next, the precursor of the polymer A2 was hydrogenated by adopting an oil-layer hydrogenation method as the hydrogenation method. The precursor of the polymer A2 was dissolved in acetone such as to have a concentration of 12% and thereby obtain an acetone solution of the precursor of the polymer A2 as a hydrogenation subject. This acetone solution was loaded into an autoclave, 500 ppm of palladium/silica ($Pd/SiO_2$) as a catalyst was added relative to 100% of the precursor of the polymer A2 serving as a hydrogenation subject, and a hydrogenation reaction was subsequently performed at a hydrogen pressure of 3.0 MPa and a temperature of 60°C for 6 hours to yield a hydrogenation reaction product. Once the hydrogenation reaction had ended, the palladium/silica was filtered off, and acetone serving as a solvent was removed under reduced pressure to obtain a polymer. The obtained polymer A2 was dissolved in a specific amount of NMP to obtain an NMP solution of the polymer A2 having a solid content concentration of 8%.

The obtained polymer A2 was used to measure the iodine value, weight-average molecular weight, and proportion of structural units resulting from polymerization of 1,3-butadiene by 1,2-bonding. The results are shown in Table 1.

(Production Example 2-1: Production of water dispersion containing polymer B1)

A reactor including a stirrer was supplied with 100 parts of deionized water and 0.5 parts of ammonium persulfate. The gas phase was purged with nitrogen gas, and the temperature was raised to 70°C. Meanwhile, a monomer composition for core portion formation was obtained in a separate vessel by mixing 40 parts of deionized water, 0.3 parts of sodium dodecylbenzenesulfonate as an emulsifier, 24.5 parts of n-butyl acrylate and 28 parts of methyl methacrylate as (meth)acrylic acid ester monomers, 14 parts of acrylonitrile as a nitrile group-containing monomer, 2.8 parts of methacrylic acid (MAA) as an acid group-containing monomer, and 0.7 parts of ethylene glycol dimethacrylate (EDMA) as a cross-linkable monomer. This monomer composition was continuously added into the reactor over 3 hours to perform a polymerization reaction at 70°C. Polymerization was continued until a polymerization conversion rate of 96% was reached to yield a water dispersion containing a particulate polymer forming a core portion. Next, this water dispersion was heated to 75°C, 1.7 parts of acrylonitrile as a nitrile group-containing monomer, 0.3 parts of methacrylic acid (MAA) as an acid group-containing monomer, and 28.0 parts of styrene (ST) as an aromatic-containing monomer were mixed and continuously added to the water dispersion, and polymerization was continued. At the point at which the polymerization conversion rate reached 96%, cooling was performed to quench the reaction to yield a water dispersion containing a polymer B1. The obtained polymer B1 had a core-shell structure in which the outer surface of a core portion was partially covered by a shell portion. Moreover, the obtained polymer B1 had glass-transition temperatures of 65°C and 105°C, a volume-average particle diameter D50 of 500 nm, and a degree of swelling in electrolyte solution of a factor of 12.0.

(Production Example 2-2: Production of water dispersion containing polymer B2)

A reactor including a stirrer was supplied with 100 parts of deionized water and 0.3 parts of ammonium persulfate. The gas phase was purged with nitrogen gas, and the temperature was raised to 70°C. Meanwhile, a monomer composition for core portion formation was obtained in a separate vessel by mixing 40 parts of deionized water, 0.3 parts of sodium dodecylbenzenesulfonate as an emulsifier, 23.1 parts of 2-ethylhexyl acrylate (2EHA) as a (meth)acrylic acid ester monomer, 7 parts of acrylonitrile as a nitrile group-containing monomer, 2.8 parts of methacrylic acid (MAA) as an acid group-containing monomer, 36.96 parts of styrene (ST) as an aromatic-containing monomer, and 0.14 parts of ethylene glycol dimethacrylate (EDMA) as a cross-linkable monomer. This monomer composition was continuously added into the reactor over 4 hours to perform a polymerization reaction at 70°C. Polymerization was continued until a polymerization conversion rate of 96% was reached to yield a water dispersion containing a particulate polymer forming a core portion. Next, this water dispersion was heated to 75°C, 1.5 parts of acrylonitrile as a nitrile group-containing monomer, 0.3 parts of methacrylic acid (MAA) as an acid group-containing monomer, and 28.2 parts of styrene (ST) as an aromatic-containing monomer were mixed and continuously added to the water dispersion, and polymerization was continued. At the point at which the polymerization conversion rate reached 96%, cooling was performed to quench the reaction to yield a water dispersion containing a polymer B2. The obtained polymer B2 had a core-shell structure in which an outer surface of a core portion was partially covered by a shell portion. Moreover, the obtained polymer B2 had glass-transition temperatures of 55°C and 105°C, a volume-average particle diameter D50 of 700 nm, and a degree of swelling in electrolyte solution of a factor of 2.4.

(Production Example 2-3: Production of water dispersion containing polymer B3)

<Production of monomer composition>

A monomer composition B3-1 was produced by mixing 20 parts of n-butyl acrylate as a (meth)acrylic acid ester monomer, 20 parts of glycidyl methacrylate as an epoxy group-containing monomer, 0.5 parts of ethylene glycol dimethacrylate as a cross-linkable monomer, and 59.5 parts of styrene as an aromatic-containing monomer.

<Production of metal hydroxide>

A colloidal dispersion liquid B3-2 containing magnesium hydroxide as a metal hydroxide was produced by gradually adding an aqueous solution of 5.6 parts of sodium hydroxide dissolved in 50 parts of deionized water to an aqueous solution of 8.0 parts of magnesium chloride dissolved in 200 parts of deionized water under stirring.

<Suspension polymerization>

A polymer B3 was produced by suspension polymerization. Specifically, the monomer composition B3-1 obtained as described above was added to the colloidal dispersion liquid B3-2 containing magnesium hydroxide, was further stirred therewith, and then 2.0 parts of t-butyl peroxy-2-ethylhexanoate (PERBUTYL O produced by NOF Corporation) was added as a polymerization initiator to obtain a mixture. The obtained mixture was subjected to 1 minute of high-shear stirring at a rotation speed of 15,000 rpm using an inline emulsifying/dispersing device (CAVITRON produced by Pacific Machinery & Engineering Co., Ltd.) so as to form droplets of the monomer composition B3-1 in the colloidal dispersion liquid B3-2 containing magnesium hydroxide.

The magnesium hydroxide-containing colloidal dispersion liquid B3-2 in which droplets of the monomer composition B3-1 had been formed was loaded into a reactor, the temperature was raised to 90°C, and a polymerization reaction was performed for 5 hours to yield a water dispersion containing a polymer B3.

The water dispersion containing the polymer B3 was stirred while adding sulfuric acid dropwise at room temperature (25°C) so as to perform acid washing until the pH was 6.5 or lower. Next, separation was performed by filtration, a slurry was reformed by adding 500 parts of deionized water to the resultant solid content, and water washing treatment (washing, filtration, and dehydration) was repeated a number of times. Thereafter, separation was performed by filtration, the resultant solid content was loaded into a vessel of a dryer, and 48 hours of drying was performed at 40°C to yield a dried polymer B3. The obtained polymer B3 had a glass-transition temperature of 40°C, a volume-average particle diameter D50 of 5.0 $\mu$m, and a degree of swelling in electrolyte solution of a factor of 2.0.

(Production Example 2-4: Production of water dispersion containing polymer B4)

A reactor including a stirrer was supplied with 100 parts of deionized water and 0.5 parts of ammonium persulfate. The gas phase was purged with nitrogen gas, and the temperature was raised to 70°C. Meanwhile, a monomer composition for core portion formation was obtained in a separate vessel by mixing 40 parts of deionized water, 0.3 parts of sodium dodecylbenzenesulfonate as an emulsifier, 24.5 parts of n-butyl acrylate and 42 parts of methyl methacrylate as (meth)acrylic acid ester monomers, 2.8 parts of methacrylic acid as an acid group-containing monomer, and 0.7 parts of ethylene glycol dimethacrylate as a cross-linkable monomer. This monomer composition was continuously added into the reactor over 2 hours to perform a polymerization reaction at 70°C. Polymerization was continued until a polymerization conversion rate of 96% was reached to yield a water dispersion containing a particulate polymer forming a core portion. Next, the water dispersion was heated to 75°C, 29.7 parts of styrene as an aromatic-containing monomer and 0.3 parts of methacrylic acid as an acid group-containing monomer were continuously supplied into this water dispersion over 60 minutes, and polymerization was continued. At the point at which the polymerization conversion rate reached 96%, cooling was performed to quench the reaction to yield a water dispersion containing a polymer B4. The obtained polymer B4 had glass-transition temperatures of 60°C and 105°C, a volume-average particle diameter D50 of 500 nm, and a degree of swelling in electrolyte solution of a factor of 13.0.

(Production Example 2-5: Production of water dispersion containing polymer B5)

A reactor including a stirrer was supplied with 100 parts of deionized water and 0.5 parts of ammonium persulfate. The gas phase was purged with nitrogen gas, and the temperature was raised to 70°C. Meanwhile, a monomer composition for core portion formation was obtained in a separate vessel by mixing 40 parts of deionized water, 0.3 parts of sodium dodecylbenzenesulfonate as an emulsifier, 24.5 parts of n-butyl acrylate as a (meth)acrylic acid ester monomer, 42 parts of acrylonitrile as a nitrile group-containing monomer, 2.8 parts of methacrylic acid (MAA) as an acid group-containing monomer, and 0.7 parts of ethylene glycol dimethacrylate (EDMA) as a cross-linkable monomer. This monomer composition was continuously added into the reactor over 3 hours to perform a polymerization reaction at 70°C. Polymerization was continued until a polymerization conversion rate of 96% was reached to yield a water dispersion containing a particulate polymer forming a core portion. Next, this water dispersion was heated to 75°C, 1.7 parts of acrylonitrile as a nitrile group-containing monomer, 0.3 parts of methacrylic acid (MAA) as an acid group-containing monomer, and 28.0 parts of styrene (ST) as an aromatic-containing monomer were mixed and continuously added to the water dispersion, and polymerization was continued. At the point at which the polymerization conversion rate reached 96%, cooling was performed to quench the reaction to yield a water dispersion containing a polymer B5. The obtained polymer B5 had a core-shell structure in which an outer surface of a core portion was partially covered by a shell portion. Moreover, the obtained polymer B5 had glass-transition temperatures of 65°C and 105°C, a volume-average particle diameter D50 of 500 nm, and a degree of swelling in electrolyte solution of a factor of 12.0.

(Production Example 2-6: Production of water dispersion containing polymer B6)

A reactor including a stirrer was supplied with 70 parts of deionized water, 0.2 parts of sodium dodecylbenzenesulfonate as an emulsifier, and 0.5 parts of ammonium persulfate. The gas phase was purged with nitrogen gas, and the temperature was raised to 75°C.

Meanwhile, a monomer composition was obtained in a separate vessel by mixing 50 parts of deionized water, 0.8 parts of sodium dodecylbenzenesulfonate as a dispersant, 70.1 parts of 2-ethylhexyl acrylate (2EHA) as a (meth)acrylic acid ester monomer, 3.0 parts of acrylic acid (AA) as an acid group-containing monomer, 1.7 parts of allyl glycidyl ether (AGE) as an epoxy group-containing monomer, 25 parts of styrene (ST) as an aromatic-containing monomer, and 0.2 parts of allyl methacrylate (AMA) as a cross-linkable monomer. This monomer composition was continuously added into the reactor over 4 hours to perform polymerization. The reaction was carried out at 75°C during the addition. Once the addition was complete, a further 3 hours of stirring was performed at 80°C, and then the reaction was ended to yield a water dispersion containing a polymer B6. The obtained adhesive polymer B6 had a glass-transition temperature of -32°C, a volume-average particle diameter D50 of 180 nm, and a degree of swelling in electrolyte solution of a factor of 1.5.

(Production Example 2-7: Production of water dispersion containing polymer B7)

A reactor including a stirrer was supplied with 70 parts of deionized water, 0.15 parts of sodium lauryl sulfate (produced by Kao Corporation; product name: EMAL® 2F (EMAL is a registered trademark in Japan, other countries, or both)) as an emulsifier, and 0.5 parts of ammonium persulfate. The gas phase was purged with nitrogen gas, and the temperature was raised to 60°C.

Meanwhile, a monomer composition was obtained in a separate vessel by mixing 50 parts of deionized water, 0.5 parts of sodium dodecylbenzenesulfonate, 94.3 parts of n-butyl acrylate as a (meth)acrylic acid ester monomer, 2 parts of acrylonitrile as a nitrile group-containing monomer, 2 parts of methacrylic acid as an acid group-containing monomer, 1.5 parts of allyl glycidyl ether as an epoxy group-containing monomer, and 0.2 parts of allyl methacrylate as a cross-linkable monomer. This monomer composition was continuously added into the reactor over 4 hours to perform polymerization. The reaction was carried out at 60°C during the addition. Once the addition was complete, a further 3 hours of stirring was performed at 70°C, and then the reaction was ended to yield a water dispersion containing an adhesive polymer B7. The obtained adhesive polymer B7 had a glass-transition temperature of -40°C, a volume-average particle diameter D50 of 350 nm, and a degree of swelling in electrolyte solution of a factor of 3.9.

(Production Example 2-8: Production of water dispersion containing polymer B8)

A reactor including a stirrer was supplied with 70 parts of deionized water, 0.2 parts of sodium lauryl sulfate (produced by Kao Corporation; product name: EMAL® 2F) as an emulsifier, and 0.5 parts of ammonium persulfate. The gas phase was purged with nitrogen gas, and the temperature was raised to 70°C.

Meanwhile, a monomer composition was obtained in a separate vessel by mixing 50 parts of deionized water, 0.5 parts of sodium dodecylbenzenesulfonate, 78.8 parts of 2-ethylhexyl acrylate as a (meth)acrylic acid ester monomer, 19 parts of acrylonitrile as a nitrile group-containing monomer, 2 parts of methacrylic acid as an acid group-containing monomer, and 0.2 parts of allyl methacrylate as a cross-linkable monomer. This monomer composition was continuously added into the reactor over 4 hours to perform polymerization. The reaction was carried out at 70°C during the addition. Once the addition was complete, a further 3 hours of stirring was performed at 75°C, and then the reaction was ended to yield a water dispersion containing an adhesive polymer B8. The obtained adhesive polymer B8 had a glass-transition temperature of -35°C, a volume-average particle diameter D50 of 180 nm, and a degree of swelling in electrolyte solution of a factor of 3.9.

(Production Example 2-9: Production of aqueous solution containing polymer B9)

A 10 L flask equipped with a septum was charged with 6,335 g of deionized water and 285 g of a 2.0% aqueous solution of L-ascorbic acid as a polymerization accelerator. These materials were heated to a temperature of 40°C, and the inside of the flask was purged with nitrogen gas at a flow rate of 100 mL/min. Next, 939.8 g (74.0%) of acrylamide and 203.2 g (16.0%) of N-hydroxyethylacrylamide as nitrogen-containing monomers and 127.0 g (10.0%) of acrylic acid as an acid group-containing monomer were mixed and were injected into the flask using a syringe. Thereafter, 300 g of a 5.0% aqueous solution of ammonium persulfate as a polymerization initiator was added into the flask using a syringe, and the reaction temperature was set to 60°C. After 2 hours, 150 g of a 5.0% aqueous solution of ammonium persulfate as a polymerization initiator and 142.5 g of a 2.0% aqueous solution of L-ascorbic acid as a polymerization accelerator were added in order to further raise the reaction conversion rate. After a further 2 hours, 150 g of a 5.0% aqueous solution of ammonium persulfate as a polymerization initiator and 142.5 g of a 2.0% aqueous solution of L-ascorbic acid as a polymerization accelerator were added. After 2 hours, 34 g of a 5% aqueous solution of sodium nitrite as a reaction inhibitor was added into the flask and stirred. Thereafter, the flask was cooled to 40°C, was converted to an air atmosphere, and the pH of the system was adjusted to 8.0 using 8% lithium hydroxide aqueous solution to produce an aqueous solution containing a water-soluble polymer B9. The water-soluble polymer B9 had a weight-average molecular weight (Mw) of 290,000.

(Example 1)

<Production of conductive material dispersion liquid>

A disper blade was used to stir (3,000 rpm, 10 minutes) 4.0 parts of multi-walled carbon nanotubes (BET specific surface area: 250 $m^2/g$; hereinafter, referred to as "CNTs") as a conductive material, 10.0 parts of the NMP solution (solid content concentration: 8%) of the polymer A1 obtained as described above (equivalent to 0.8 parts of polymer A1 (solid content)), and 86.0 parts of NMP as a solvent, and then a bead mill (LMZ015 produced by Ashizawa Finetech Ltd.) in which zirconia beads of 1 mm in diameter were used was used to perform 1 hour of mixing at a circumferential speed of 12 m/s to produce a conductive material dispersion liquid.

<Production of slurry composition for positive electrode mixed material layer>

A slurry composition for a positive electrode mixed material layer was produced by adding together 97.84 parts of a ternary active material having a layered structure ($LiNi_{0.8}Co_{0.1}Mn_{0.1}O_2$; average particle diameter: 10 $\mu$m) as a positive electrode active material, 1.2 parts of polyvinylidene fluoride, 0.96 parts of the conductive material dispersion liquid obtained as described above (amount in terms of solid content; containing 0.80 parts of CNTs and 0.16 parts of polymer A1), and NMP as a solvent and mixing (60 rpm, 30 minutes) these materials in a planetary mixer. Note that the additive amount of NMP was adjusted such that the viscosity (measured by single-cylinder rotational viscometer in accordance with JIS Z8803:1991; temperature: 25°C; rotation speed: 60 rpm) of the obtained slurry composition for a positive electrode mixed material layer was within a range of 4,000 mPa·s to 5,000 mPa·s.

<Production of positive electrode>

The obtained slurry composition for a positive electrode mixed material layer was applied onto aluminum foil of 20 $\mu$m in thickness serving as a current collector by a comma coater such as to have a specific coating weight.
The aluminum foil was then conveyed inside an oven having a temperature of 90°C for 2 minutes and an oven having a temperature of 120°C for 2 minutes at a speed of 200 mm/min so as to dry the slurry composition on the aluminum foil and thereby obtain a positive electrode web having a positive electrode mixed material layer formed on the current collector.
The positive electrode mixed material layer-side of the produced positive electrode web was subsequently roll pressed with a line pressure of 14 t (tons) in an environment having a temperature of 25 $\pm$ 3°C so as to adjust the positive electrode mixed material layer to a specific density and obtain a positive electrode. The positive electrode mixed material layer of the obtained positive electrode had a mass per unit area of 22 mg/cm$^2$, a density of 3.4 g/cm$^3$, and a void fraction of 28%.

<Production of negative electrode>

A 5 MPa pressure-resistant vessel equipped with a stirrer was charged with 33 parts of 1,3-butadiene as an aliphatic conjugated diene monomer, 3.5 parts of itaconic acid as an acidic group-containing monomer, 63.5 parts of styrene as an aromatic vinyl monomer, 0.4 parts of sodium dodecylbenzenesulfonate as an emulsifier, 150 parts of deionized water, and 0.5 parts of potassium persulfate as a polymerization initiator. These materials were thoroughly stirred and were then heated to 50°C to initiate polymerization. At the point at which the polymerization conversion rate reached 96%, cooling was performed to quench the polymerization reaction to yield a mixture containing a particulate binder (styrene-butadiene copolymer). This mixture was adjusted to pH 8 through addition of 5% sodium hydroxide aqueous solution and was then subjected to thermal-vacuum distillation to remove unreacted monomer. Thereafter, the mixture was cooled to 30°C or lower to obtain a water dispersion containing a binder for a negative electrode.
Next, 48.75 parts of artificial graphite and 48.75 parts of natural graphite as negative electrode active materials and 1 part of carboxymethyl cellulose as a thickener were loaded into a planetary mixer. These materials were diluted to a solid content concentration of 60% using deionized water and were then kneaded at a rotation speed of 45 rpm for 60 minutes. Thereafter, 1.5 parts in terms of solid content of the water dispersion containing the binder for a negative electrode obtained as described above was added and was kneaded therewith at a rotation speed of 40 rpm for 40 minutes. The viscosity was adjusted to $3,000 \pm 500$ mPa·s (measured by B-type viscometer at 25°C and 60 rpm) through addition of deionized water to produce a slurry for a negative electrode mixed material layer.

Next, copper foil of 15 $\mu$m in thickness was prepared as a current collector. The slurry for a negative electrode mixed material layer was applied onto both sides of the copper foil such as to have a coating weight after drying of 10 mg/cm$^2$ at each side and was then dried at 60°C for 20 minutes and at 120°C for 20 minutes. Thereafter, 2 hours of heat treatment was performed at 150°C to obtain a negative electrode web. This negative electrode web was rolled by roll pressing to produce a sheet-shaped negative electrode including the copper foil and negative electrode mixed material layers (both sides) of 1.6 g/cm$^3$ in density.

The slurry composition for a negative electrode mixed material layer was applied onto the surface of copper foil of 15 $\mu$m in thickness serving as a current collector by a comma coater such as to have a specific coating weight. The copper foil with the slurry composition for a negative electrode mixed material layer applied thereon was subsequently conveyed inside an oven having a temperature of 80°C for 2 minutes and an oven having a temperature of 110°C for 2 minutes at a speed of 400 mm/min so as to dry the slurry composition on the copper foil and obtain a negative electrode web having a negative electrode mixed material layer formed on the current collector.

The negative electrode mixed material layer-side of the produced negative electrode web was subsequently roll pressed with a line pressure of 11 t (tons) in an environment having a temperature of $25 \pm 3$°C so as to adjust the negative electrode mixed material layer to a specific density and obtain a negative electrode. The negative electrode mixed material layer of the obtained negative electrode had a mass per unit area of 13 mg/cm$^2$ and a density of 1.65 g/cm$^3$.

<Production of slurry composition for adhesive layer>

A slurry composition for an adhesive layer (solid content concentration: 10%) was obtained in the form of a slurry by mixing 100 parts (in terms of solid content) of the water dispersion of the polymer B 1, 15 parts (in terms of solid content) of the water dispersion of the polymer B6, and deionized water.

<Production of separator including heat-resistant layer at one side>

A separator substrate made of polyethylene (produced by Asahi Kasei Corporation; product name: ND412; thickness: 12 $\mu$m) was prepared. A ceramic slurry (BM-2000M produced by Zeon Corporation) containing alumina particles as inorganic particles was applied onto the surface of the prepared separator substrate and was dried at a temperature of 50°C for 3 minutes to obtain a separator including a heat-resistant layer at one side (heat-resistant layer thickness: 2 $\mu$m).

<Production of separator including adhesive layers at both sides>

The above-described separator including a heat-resistant layer at one side was prepared. The above-described slurry composition for an adhesive layer was then applied onto one side of the prepared separator including the heat-resistant layer and was dried at a temperature of 50°C for 3 minutes. The formed adhesive layer had a mass per unit area after drying of 0.12 g/m$^2$. The same operations were performed with respect to the other side of the separator substrate to obtain an adhesive layer-equipped separator including adhesive layers at both sides.

<Production of lithium ion secondary battery>

A wound cell (discharge capacity equivalent to 700 mAh) was produced using the negative electrode, positive electrode, and adhesive layer-equipped separator described above and was arranged inside of an aluminum laminate sheet casing. Note that the surface at the heat-resistant layer-side of the adhesive layer-equipped separator was arranged facing the positive electrode. Thereafter, the inside of the aluminum packing was filled with a LiPF$_6$ solution of 1.0 M in concentration (solvent: mixed solvent of ethylene carbonate (EC)/ethyl methyl carbonate (EMC) = 3/7 (volume ratio); additive: containing 2 volume% (solvent ratio) of vinylene carbonate) as an electrolyte solution. The inside of the lithium ion secondary battery was subsequently depressurized to -95 kPa, this state was maintained for 1 minute, and then heat sealing was performed. One hour after this heat sealing, the lithium ion secondary battery, together with the aluminum laminate sheet casing, was pressed for 2 minutes under conditions of 80°C and 1 MPa to produce a lithium ion secondary battery.

The positive electrode, negative electrode, adhesive layer-equipped separator, and lithium ion secondary battery produced as described above were used to evaluate the adhesiveness between the positive electrode and the separator after hot pressing, the injectability, cell windability, cycle characteristics, and low-temperature rate characteristics of the lithium ion secondary battery, and the heat resistance of the separator in electrolyte solution. The results are shown in Table 1.

(Example 2)

A positive electrode, a negative electrode, an adhesive layer-equipped separator, and a lithium ion secondary battery were produced and various measurements and evaluations were performed in the same way as in Example 1 with the exception that production of a conductive material dispersion liquid and production of a slurry composition for a positive electrode mixed material layer were performed as described below. The results are shown in Table 1.

<Production of conductive material dispersion liquid>

A disper blade was used to stir (3,000 rpm, 10 minutes) 4.0 parts of multi-walled carbon nanotubes (BET specific surface area: 250 $m^2/g$; hereinafter referred to as "CNTs") as a conductive material, 1.875 parts of the NMP solution (solid content concentration: 8%) of the polymer A1 obtained as described above (equivalent to 0.15 parts of polymer A1 (solid content)), and 94.125 parts of NMP as a solvent, and then a bead mill (LMZ015 produced by Ashizawa Finetech Ltd.) in which zirconia beads of 1 mm in diameter were used was used to perform 1 hour of mixing at a circumferential speed of 12 m/s to produce a conductive material dispersion liquid.

<Production of slurry composition for positive electrode mixed material layer>

A slurry composition for a positive electrode mixed material layer was produced by adding together 97.77 parts of a ternary active material having a layered structure ($LiNi_{0.8}Co_{0.1}Mn_{0.1}O_2$; average particle diameter: 10 $\mu$m) as a positive electrode active material, 1.4 parts of polyvinylidene fluoride, 0.83 parts of the conductive material dispersion liquid obtained as described above (amount in terms of solid content; containing 0.80 parts of CNTs and 0.03 parts of polymer A1), and NMP as a solvent and mixing (60 rpm, 30 minutes) these materials in a planetary mixer. Note that the additive amount of NMP was adjusted such that the viscosity (measured by single-cylinder rotational viscometer in accordance with JIS Z8803:1991; temperature: 25°C; rotation speed: 60 rpm) of the obtained slurry composition for a positive electrode mixed material layer was within a range of 4,000 mPa·s to 5,000 mPa·s.

(Example 3)

A positive electrode, a negative electrode, an adhesive layer-equipped separator, and a lithium ion secondary battery were produced and various measurements and evaluations were performed in the same way as in Example 1 with the exception that production of a conductive material dispersion liquid and production of a slurry composition for a positive electrode mixed material layer were performed as described below. The results are shown in Table 1.

<Production of conductive material dispersion liquid>

A disper blade was used to stir (3,000 rpm, 10 minutes) 4.0 parts of multi-walled carbon nanotubes (BET specific surface area: 250 $m^2/g$; hereinafter referred to as "CNTs") as a conductive material, 10.0 parts of the NMP solution (solid content concentration: 8%) of the polymer A2 obtained as described above (equivalent to 0.8 parts of polymer A2 (solid content)), and 86.0 parts of NMP as a solvent, and then a bead mill (LMZ015 produced by Ashizawa Finetech Ltd.) in which zirconia beads of 1 mm in diameter were used was used to perform 1 hour of mixing at a circumferential speed of 12 m/s to produce a conductive material dispersion liquid.

<Production of slurry composition for positive electrode mixed material layer>

A slurry composition for a positive electrode mixed material layer was produced by adding together 94.2 parts of a ternary active material having a layered structure ($LiNi_{0.8}Co_{0.1}Mn_{0.1}O_2$; average particle diameter: 10 $\mu$m) as a positive electrode active material, 4.84 parts of the NMP solution of the polymer A2 obtained as described above (amount in terms of polymer A2 (solid content)), 0.96 parts of the conductive material dispersion liquid obtained as described above (amount in terms of solid content; containing 0.80 parts of CNTs and 0.16 parts of polymer A2), and NMP as a solvent and mixing (60 rpm, 30 minutes) these materials in a planetary mixer. Note that the additive amount of NMP was adjusted such that the viscosity (measured by single-cylinder rotational viscometer in accordance with JIS Z8803:1991; temperature: 25°C; rotation speed: 60 rpm) of the obtained slurry composition for a positive electrode mixed material layer was within a range of 4,000 mPa·s to 5,000 mPa·s.

(Example 4)

A positive electrode, a negative electrode, an adhesive layer-equipped separator, and a lithium ion secondary battery were produced and various measurements and evaluations were performed in the same way as in Example 1 with the exception that in production of the separator including adhesive layers at both sides, the coating weight of the slurry composition for an adhesive layer was changed so as to change the mass per unit area of the formed adhesive layers from 0.12 $g/m^2$ to 0.04 $g/m^2$. The results are shown in Table 1.

(Example 5)

A positive electrode, a negative electrode, an adhesive layer-equipped separator, and a lithium ion secondary battery were produced and various measurements and evaluations were performed in the same way as in Example 1 with the exception that in production of the slurry composition for an adhesive layer, the water dispersion of the polymer B2 was used instead of the water dispersion of the polymer B1, and that in production of the separator including adhesive layers at both sides, the coating weight of the slurry composition for an adhesive layer was changed so as to change the mass per unit area of the formed adhesive layers from 0.12 $g/m^2$ to 0.25 $g/m^2$. The results are shown in Table 1.

(Example 6)

A positive electrode, a negative electrode, an adhesive layer-equipped separator, and a lithium ion secondary battery were produced and various measurements and evaluations were performed in the same way as in Example 1 with the exception that in production of the separator including adhesive layers at both sides, the coating weight of the slurry composition for an adhesive layer was changed so as to change the mass per unit area of the formed adhesive layers from 0.12 $g/m^2$ to 0.5 $g/m^2$. The results are shown in Table 1.

(Example 7)

A positive electrode, a negative electrode, an adhesive layer-equipped separator, and a lithium ion secondary battery were produced and various measurements and evaluations were performed in the same way as in Example 1 with the exception that in production of the positive electrode, the roll pressing conditions of the positive electrode web were changed to a line pressure of 16 t (tons), and the roll gap was adjusted so as to change the density of the positive electrode mixed material layer from 3.4 $g/cm^3$ to 3.65 $g/cm^3$. The results are shown in Table 1.

(Example 8)

A positive electrode, a negative electrode, an adhesive layer-equipped separator, and a lithium ion secondary battery were produced and various measurements and evaluations were performed in the same way as in Example 1 with the exception that in production of the positive electrode, the roll pressing conditions of the positive electrode web were changed to a line pressure of 20 t (tons), and the roll gap was adjusted so as to change the density of the positive electrode mixed material layer from 3.4 $g/cm^3$ to 3.8 $g/cm^3$. The results are shown in Table 1.

(Example 9)

A positive electrode, a negative electrode, an adhesive layer-equipped separator, and a lithium ion secondary battery were produced and various measurements and evaluations were performed in the same way as in Example 1 with the exception that in production of the slurry composition for a positive electrode mixed material layer, 97.84 parts of an active material having a layered structure ($LiCoO_2$; average particle diameter: 10 $\mu$m) was used instead of a ternary active material having a layered structure ($LiNi_{0.8}Co_{0.1}Mn_{0.1}O_2$; average particle diameter: 10 $\mu$m) as a positive electrode active material, and that in production of the positive electrode, the coating weight of the slurry composition for a positive electrode mixed material layer and the roll pressing conditions of the positive electrode web were adjusted so as to change the density of the positive electrode mixed material layer from 3.4 $g/cm^3$ to 3.85 $g/cm^3$. The results are shown in Table 1.

(Example 10)

A positive electrode, a negative electrode, an adhesive layer-equipped separator, and a lithium ion secondary battery were produced and various measurements and evaluations were performed in the same way as in Example 1 with the exception that production of a conductive material dispersion liquid and production of a slurry composition for a positive electrode mixed material layer were performed as described below, and that in production of the positive electrode, the coating weight of the slurry composition for a positive electrode mixed material layer and the roll pressing conditions of the positive electrode web were adjusted so as to change the mass per unit area of the positive electrode mixed material layer from 22 mg/cm$^2$ to 20 mg/cm$^2$ and change the density of the positive electrode mixed material layer from 3.4 g/cm$^3$ to 2.5 g/cm$^3$. The results are shown in Table 1.

<Production of conductive material dispersion liquid>

A disper blade was used to stir (3,000 rpm, 10 minutes) 10.0 parts of acetylene black (produced by Denka Company Limited; product name: HS-100) as a conductive material, 10.0 parts of the NMP solution (solid content concentration: 8%) of the polymer A1 obtained as described above (equivalent to 0.8 parts of polymer A1 (solid content)), and 80.0 parts of NMP as a solvent, and then a bead mill (LMZ015 produced by Ashizawa Finetech Ltd.) in which zirconia beads of 1 mm in diameter were used was used to perform 1 hour of mixing at a circumferential speed of 12 m/s to produce a conductive material dispersion liquid.

<Production of slurry composition for positive electrode mixed material layer>

A slurry composition for a positive electrode mixed material layer was produced by adding together 96.64 parts of an active material having an olivine structure (LiFePO$_4$; average particle diameter: 1 $\mu$m) as a positive electrode active material, 1.2 parts of polyvinylidene fluoride, 2.16 parts of the conductive material dispersion liquid obtained as described above (amount in terms of solid content; containing 2.00 parts of acetylene black and 0.16 parts of polymer A1), and NMP as a solvent and mixing (60 rpm, 30 minutes) these materials in a planetary mixer. Note that the additive amount of NMP was adjusted such that the viscosity (measured by single-cylinder rotational viscometer in accordance with JIS Z8803:1991; temperature: 25°C; rotation speed: 60 rpm) of the obtained slurry for a positive electrode was within a range of 4,000 mPa·s to 5,000 mPa·s.

(Example 11)

A positive electrode, a negative electrode, an adhesive layer-equipped separator, and a lithium ion secondary battery were produced and various measurements and evaluations were performed in the same way as in Example 1 with the exception that production of a slurry composition for an adhesive layer was performed as described below and that production of a separator including adhesive layers at both sides was performed as described below without performing production of a separator including a heat-resistant layer at one side. The results are shown in Table 2.

<Production of slurry composition for adhesive layer>

A slurry composition for an adhesive layer having a solid content concentration of 18% was produced by mixing 80 parts of alumina particles (produced by Nippon Light Metal Co., Ltd.; product name: LS-256; volume-average particle diameter: 0.5 $\mu$m) as non-conductive inorganic particles, 18 parts of PVdF-HFP (Kynar Flex LBG produced by Arkema; cyanoethylation rate: 75%; weight-average molecular weight (Mw): 60,000) and 2 parts of cyanoethylated polyvinyl alcohol (CR-V produced by Shin-Etsu Chemical Co., Ltd.) as polymers, and a specific amount of acetone and performing 1 hour of treatment thereof using a bead mill (produced by Ashizawa Finetech Ltd.; product name: LMZ015).

<Production of separator including adhesive layers at both sides>

A separator substrate made of polyethylene (produced by Asahi Kasei Corporation; product name: ND412; thickness: 12 $\mu$m) was prepared. The slurry composition for an adhesive layer produced as described above was applied onto the surface of the prepared separator substrate by dip coating and was dried at a temperature of 50°C for 3 minutes to obtain a separator including adhesive layers (thickness: 4.5 $\mu$m) at both sides.

(Example 12)

A positive electrode, a negative electrode, an adhesive layer-equipped separator, and a lithium ion secondary battery were produced and various measurements and evaluations were performed in the same way as in Example 1 with the exception that production of a slurry composition for an adhesive layer was performed as described below and that production of a separator including adhesive layers at both sides was performed as described below without performing production of a separator including a heat-resistant layer at one side. The results are shown in Table 2.

<Production of slurry composition for adhesive layer>

Alumina particles (produced by Nippon Light Metal Co., Ltd.; product name: LS-256; volume-average particle

diameter: 0.5 μm) were used as non-conductive inorganic particles, and the water dispersion containing the polymer B9 was used as a dispersant and a viscosity modifier.

A dispersion liquid was obtained by mixing 100 parts of the non-conductive inorganic particles, 0.5 parts in terms of solid content of the water dispersion containing the polymer B9, and deionized water and performing 1 hour of treatment using a bead mill (produced by Ashizawa Finetech Ltd.; product name: LMZ015). In addition, 12 parts in terms of solid content of the polymer B3, 5 parts in terms of solid content of the polymer B7, and 1 part in terms of solid content of the water dispersion containing the polymer B9 were mixed so as to produce a slurry composition for an adhesive layer having a solid content concentration of 35%.

<Production of adhesive functional layer-equipped separator>

A separator substrate made of polyethylene (produced by Asahi Kasei Corporation; product name: ND412; thickness: 12 μm) was prepared. The slurry composition for an adhesive layer produced as described above was applied onto the surface of the prepared separator substrate and was dried at a temperature of 50°C for 3 minutes to obtain a separator including an adhesive layer at one side. The same operations were performed with respect to the other side of the separator substrate to produce an adhesive layer-equipped separator having adhesive layers (thickness: 3 μm) at both sides.

(Example 13)

A positive electrode, a negative electrode, an adhesive layer-equipped separator, and a lithium ion secondary battery were produced and various measurements and evaluations were performed in the same way as in Example 1 with the exception that in production of the slurry composition for an adhesive layer, the water dispersion of the polymer B4 was used instead of the water dispersion of the polymer B1 and the water dispersion of the polymer B8 was used instead of the water dispersion of the polymer B6, and that in production of the separator including adhesive layers at both sides, the coating weight of the slurry composition for an adhesive layer was changed so as to change the mass per unit area of the formed adhesive layers from 0.12 g/m² to 0.15 g/m². The results are shown in Table 2.

(Example 14)

A positive electrode, a negative electrode, an adhesive layer-equipped separator, and a lithium ion secondary battery were produced and various measurements and evaluations were performed in the same way as in Example 1 with the exception that in production of the slurry composition for an adhesive layer, the water dispersion of the polymer B5 was used instead of the water dispersion of the polymer B1, and that in production of the separator including adhesive layers at both sides, the coating weight of the slurry composition for an adhesive layer was changed so as to change the mass per unit area of the formed adhesive layers from 0.12 g/m² to 0.15 g/m². The results are shown in Table 2.

(Example 15)

A positive electrode, a negative electrode, an adhesive layer-equipped separator, and a lithium ion secondary battery were produced and various measurements and evaluations were performed in the same way as in Example 1 with the exception that production of a separator including adhesive layers at both sides was performed as described below without performing production of a separator including a heat-resistant layer at one side. The results are shown in Table 2.

<Production of separator including adhesive layers at both sides>

A separator substrate made of polyethylene (produced by Asahi Kasei Corporation; product name: ND412; thickness: 12 μm) was prepared. The slurry composition for an adhesive layer produced in Example 1 was applied onto the surface of the prepared separator substrate by dip coating and was dried at a temperature of 50°C for 3 minutes to obtain a separator including adhesive layers (thickness: 4.5 μm) at both sides.

(Comparative Example 1)

A positive electrode, a negative electrode, an adhesive layer-equipped separator, and a lithium ion secondary battery were produced and various measurements and evaluations were performed in the same way as in Example 1 with the exception that production of a slurry composition for a positive electrode mixed material layer was performed as described below without performing production of a conductive material dispersion liquid. The results are shown in Table 2.

<Production of slurry composition for positive electrode mixed material layer>

A slurry composition for a positive electrode mixed material layer was produced by adding together 98 parts of a ternary active material having a layered structure ($LiNi_{0.8}Co_{0.1}Mn_{0.1}O_2$; average particle diameter: 10 μm) as a positive electrode active material, 1.2 parts of polyvinylidene fluoride, 0.8 parts of multi-walled carbon nanotubes (BET specific surface area: 250 $m^2$/g) as a conductive material, and NMP as a solvent and mixing (60 rpm, 30 minutes) these materials in a planetary mixer. Note that the additive amount of NMP was adjusted such that the viscosity (measured by single-cylinder rotational viscometer in accordance with JIS Z8803:1991; temperature: 25°C; rotation speed: 60 rpm) of the obtained slurry composition for a positive electrode mixed material layer was within a range of 4,000 mPa·s to 5,000 mPa·s.

(Comparative Example 2)

A positive electrode, a negative electrode, an adhesive layer-equipped separator, and a lithium ion secondary battery were produced and various measurements and evaluations were performed in the same way as in Example 1 with the exception that production of a slurry composition for a positive electrode mixed material layer was performed as described below. The results are shown in Table 2.

<Production of slurry for positive electrode>

A slurry composition for a positive electrode mixed material layer was produced by adding together 89.2 parts of a ternary active material having a layered structure ($LiNi_{0.8}Co_{0.1}Mn_{0.1}O_2$; average particle diameter: 10 μm) as a positive electrode active material, 9.86 parts of the NMP solution of the polymer A1 obtained as described above (amount in terms of polymer A1 (solid content)), 0.96 parts of the conductive material dispersion liquid obtained as described above (amount in terms of solid content; containing 0.80 parts of CNTs and 0.16 parts of polymer A1), and NMP as a solvent and mixing (60 rpm, 30 minutes) these materials in a planetary mixer. Note that the additive amount of NMP was adjusted such that the viscosity (measured by single-cylinder rotational viscometer in accordance with JIS Z8803:1991; temperature: 25°C; rotation speed: 60 rpm) of the obtained slurry composition for a positive electrode mixed material layer was within a range of 4,000 mPa·s to 5,000 mPa·s.

(Comparative Example 3)

A positive electrode, a negative electrode, and a lithium ion secondary battery were produced and various measurements and evaluations were performed in the same way as in Example 1 with the exception that production of a separator including adhesive layers at both sides was not performed and that the separator including a heat-resistant layer at one side was used instead of a separator including adhesive layers at both sides as a separator. The results are shown in Table 2.

(Comparative Example 4)

A positive electrode, a negative electrode, an adhesive layer-equipped separator, and a lithium ion secondary battery were produced and various measurements and evaluations were performed in the same way as in Example 1 with the exception that in production of the separator including adhesive layers at both sides, the coating weight of the slurry composition for an adhesive layer was changed so as to change the mass per unit area of the formed adhesive layers from 0.12 $g/m^2$ to 0.96 $g/m^2$. The results are shown in Table 1.
In Tables 1 and 2, shown below:

"Butadiene" indicates 1,3-butadiene;
"PVdF" indicates polyvinylidene fluoride;
"Molecular weight" indicates weight-average molecular weight (Mw);
"PE" indicates polyethylene;
"X/Y" indicates ratio (X/Y) of X and Y when total proportional content of acid group-containing monomer units, hydroxyl group-containing monomer units, epoxy group-containing monomer units, amide group-containing monomer units, and nitrile group-containing monomer units in polymer B contained in adhesive layer is denoted as X and proportional content of (meth)acrylonitrile monomer units in polymer A contained in positive electrode mixed material layer is denoted as Y;

"NMC532" indicates ternary active material having layered structure ($LiNi_{0.8}Co_{0.1}Mn_{0.1}O_2$);

"LCO" indicates active material having layered structure ($LiCoO_2$);

"LFP" indicates active material having olivine structure ($LiFePO_4$);

"CNT" indicates multi-walled carbon nanotubes;

"AcB" indicates acetylene black;

"EDMA" indicates ethylene glycol dimethacrylate;

"BA" indicates butyl acrylate;

"AA" indicates acrylic acid;

"2EHA" indicates 2-ethylhexyl acrylate;

"AN" indicates acrylonitrile;

"MAA" indicates methacrylic acid;

"AGE" indicates allyl glycidyl ether;

"GMA" indicates glycidyl methacrylate;

"AMA" indicates allyl methacrylate;

"ST" indicates styrene;

"Particle diameter" indicates volume-average particle diameter;

"Tg" indicates glass-transition temperature; and

"Degree of swelling" indicates degree of swelling in electrolyte solution.

[Table 1]

| | | | Example 1 | Example 2 | Example 3 | Example 4 |
|---|---|---|---|---|---|---|
| Positive electrode mixed material layer | Polymer A | Type | A1 | A1 | A2 | A1 |
| | | Proportional content Y of acrylonirile units [mass%] | 35 | 35 | 35 | 35 |
| | | Proportional content of butadiene units and hydrogenated butadiene units [mass%] | 65 | 65 | 65 | 65 |
| | | Iodine value [mg/100 mg] | 20 | 20 | 20 | 20 |
| | | Molecular weight | 100000 | 100000 | 280000 | 100000 |
| | | Proportional content of structural units derived from butadiene polymerized by 1,2-bonding [mass%] | 9.1 | 9.1 | 9.1 | 9.1 |
| | | Content [mass%] | 0.16 | 0.03 | 5 | 0.16 |
| | PVdF | Content [mass%] | 1.2 | 1.4 | 0 | 1.2 |
| | Positive electrode active material | Type | NMC532 | NMC532 | NMC532 | NMC532 |
| | | Content [mass%] | 97.84 | 97.77 | 94.2 | 97.84 |
| | Conductive material | Type | CNT | CNT | CNT | CNT |
| | | Content [mass%] | 0.8 | 0.8 | 0.8 | 0.8 |
| | | Mass per unit area [mg/cm$^2$] | 22 | 22 | 22 | 22 |
| | | Density [g/cm$^3$] | 3.4 | 3.4 | 3.3 | 3.4 |
| | | Void fraction [%] | 28 | 28 | 28 | 28 |
| | | Separator substrate (thickness) | PE (9 $\mu$m) | PE (9 $\mu$m) | PE (9 $\mu$m) | PE (9 $\mu$m) |
| | | Ratio of coverage by polymer [%] | 12 | 12 | 12 | 4 |
| | | Type | B1 | B1 | B1 | B1 |

| | | | | | | Example 1 | Example 2 | Example 3 | Example 4 |
|---|---|---|---|---|---|---|---|---|---|
| Adhesive layer | First polymer (polymer B) | Chemical composition | | (Meth)acrylic acid ester monomer units [mass%] | | Core: MMA/BA = 28/24.5 | Core: MMA/BA = 28/24.5 | Core: MMA/BA = 28/24.5 | Core: MMA/BA = 28/24.5 |
| | | | Polar group-containing monomer units | Nitrile group-containing monomer units [mass%] | | Core: AN 14 Shell: AN 1.7 | Core: AN 14 Shell: AN 1.7 | Core: AN 14 Shell: AN 1.7 | Core: AN 14 Shell: AN 1.7 |
| | | | | Acid group-containing monomer units [mass%] | | Core: MAA 2.8 Shell: MAA 0.3 | Core: MAA 2.8 Shell: MAA 0.3 | Core: MAA 2.8 Shell MAA 0.3 | Core: MAA 2.8 Shell: MAA 0.3 |
| | | | | Epoxy group-containing monomer units [mass%] | | - | - | - | - |
| | | | Other | Cross-linkable monomer units [mass%] | | Core: EDMA 0.7 | Core: EDMA 0.7 | Core: EDMA 0.7 | Core: EDMA 0.7 |
| | | | monomer units | Aromatic vinyl monomer units [mass%] | | Shell: ST 28 | Stell: ST 28 | Shell ST 28 | Shell: ST 28 |

(continued)

| | | | | Example 1 | Example 2 | Example 3 | Example 4 |
|---|---|---|---|---|---|---|---|
| Separator | | Physical properties | | Particle diameter:500nm Tg: 65°C/105°C Degree of swelling: ×12 | Particle diameter:500nm Tg: 65°C/105°C Degree of swelling: ×12 | Particle diameter:500nm Tg: 65°C/105°C Degree of swelling: ×12 | Particle diameter:500nm Tg: 65°C/105°C Degree of swelling: ×12 |
| | | Amount [parts by mass] | | 100 | 100 | 100 | 100 |
| | | Type | | B6 | B6 | B6 | B6 |
| | Second polymer (polymer B) | Chemical composition | Polar group-containing monomer units [mass%] | AGE/AA = 1.7/3 | AGE/AA = 1.7/3 | AGE/AA = 1.7/3 | AGE/AA = 1.7/3 |
| | | | Other monomer units [mass%] | ST/2EHA/AMA = 25/70.1/0.2 | ST/2EHA/AMA = 25/70.1/0.2 | ST/2EHA/AMA = 25/70.1/0.2 | ST/2EHA/AMA = 25/70.1/0.2 |
| | | Physical properties | | Particle diameter:180nm Tg:-32°C Degree of swelling: ×1.5 | Particle diameter:180nm Tg: -32°C Degree of swelling: ×1.5 | Particle diameter:180nm Tg: -32°C Degree of swelling: ×1.5 | Particle diameter:180nm Tg:-32°C Degree of swelling: ×1.5 |
| | | Amount [parts by mass] | | 15 | 15 | 15 | 15 |
| | | Total proportional content X of polar group-containing monomer units in polymerB of adhesive layer [mass%] | | 17 | 17 | 17 | 17 |
| | | X/Y | | 0.48 | 0.48 | 0.48 | 0.48 |
| | Inorganic particles | Inorganic particles | | - | - | - | - |
| | | Amount [parts by mass] | | - | - | - | - |
| | | Mass per unit area [g/m²] | | 0.12 | 0.12 | 0.12 | 0.04 |
| Heat-resistant layer | | Inorganic particles | | Alumina | Alumina | Alumina | Alumina |
| | | Thickness [µm] | | 2 | 2 | 2 | 2 |

EP 4 287 297 A1

| | | Example 1 | Example 2 | Example 3 | Example 4 |
|---|---|---|---|---|---|
| Evaluations | Adhesiveness between electrode and separator after hot pressing | A | C | A | C |
| | Injectabiliy | A | C | A | A |
| | Cell windabitity | A | C | A | A |
| | Cycle characteristics (25°C) | A | A | C | C |
| | Low-temperature rate characteristics (-10°C) | A | C | C | A |
| | Heat shrinkage resistance of separator in electrolyte solution | A | C | A | C |

| Example 5 | Example 6 | Example 7 | Example 8 | Example 9 | Example 10 |
|---|---|---|---|---|---|
| A1 | A1 | A1 | A1 | A1 | A1 |
| 35 | 35 | 35 | 35 | 35 | 35 |
| 65 | 65 | 65 | 65 | 65 | 65 |
| 20 | 20 | 20 | 20 | 20 | 20 |
| 100000 | 100000 | 100000 | 100000 | 100000 | 100000 |
| 9.1 | 9.1 | 9.1 | 9.1 | 9.1 | 9.1 |
| 0.16 | 0.16 | 0.16 | 0.16 | 0.16 | 0.16 |
| 1.2 | 1.2 | 1.2 | 1.2 | 1.2 | 1.2 |
| NMC532 | NMC532 | NMC532 | NMC532 | LCO | LFP |
| 97.84 | 97.84 | 97.84 | 97.84 | 97.84 | 96.64 |
| CNT | CNT | CNT | CNT | CNT | AcB |
| 0.8 | 0.8 | 0.8 | 0.8 | 0.8 | 2 |
| 22 | 22 | 22 | 22 | 22 | 20 |
| 3.4 | 3.4 | 3.65 | 3.8 | 3.85 | 2.5 |
| 28 | 28 | 23 | 17 | 23 | 30 |
| PE (9 $\mu$m) | PE (9 $\mu$m) | PE (9 $\mu$m) | PE (9 $\mu$m) | PE (9 $\mu$m) | PE (9 $\mu$m) |
| 30 | 65 | 12 | 12 | 12 | 12 |
| B2 | B1 | B1 | B1 | B1 | B1 |

| Example 5 | Example 6 | Example 7 | Example 8 | Example 9 | Example 10 |
|---|---|---|---|---|---|
| Core: 2EHA 23.1 | Core: MMA/BA = 28/24.5 | Core: MMA/BA = 28/24.5 | Core: MMA/BA = 28/24.5 | Core: MMA/BA = 28/24.5 | Core: MMA/BA = 28/24.5 |
| Core: AN 7 Shell: AN 1.5 | Core: AN 14 Shell: AN 1.7 | Core: AN 14 Shell: AN 1.7 | Core: AN 14 Shell: AN 1.7 | Core: AN 14 Shell: AN 1.7 | Core: AN 14 Shell: AN 1.7 |
| Core: MAA 2.8 Shell: MAA 0.3 | Core: MAA 2.8 Shell: MAA 0.3 | Core: MAA 2.8 Shell: MAA 0.3 | Core: MAA 2.8 Shell: MAA 0.3 | Core: MAA 2.8 Shell: MAA 0.3 | Core: MAA 2.8 Shell: MAA 0.3 |
| - | - | - | - | - | - |
| Core:EDMA 0.14 | Core: EDMA 0.7 | Core: EDMA 0.7 | Core: EDMA 0.7 | Core: EDMA 0.7 | Core: EDMA 0.7 |
| Core: ST 36.96 Shell: ST 282 | Shell: ST 28 | Shell: ST 28 | Shell: ST 28 | Shell: ST 28 | Shell: ST 28 |
| Particle diameter: 700 nm Tg: 55°C/105°C Degree of swelling: ×2.4 | Particle diameter: 500 nm Tg: 65°C/105°C Degree of swelling: ×12 | Particle diameter: 500 nm Tg: 65°C/105°C Degree of swelling: ×12 | Particle diameter: 500 nm Tg: 65°C/105°C Degree of swelling: ×12 | Particle diameter: 500 nm Tg: 65°C/105°C Degree of swelling: ×12 | Particle diameter: 500 nm Tg: 65°C/105°C Degree of swelling: ×12 |
| 100 | 100 | 100 | 100 | 100 | 100 |
| B6 | B6 | B6 | B6 | B6 | B6 |
| AGE/AA = 1.7/3 | AGE/AA = 1.7/3 | AGE/AA = 1.7/3 | AGE/AA = 1.7/3 | AGE/AA = 1.7/3 | AGE/AA = 1.7/3 |

| Example 5 | Example 6 | Example 7 | Example 8 | Example 9 | Example 10 |
|---|---|---|---|---|---|
| ST/2EHA/AMA = 25/70.1/0.2 | ST/2EHA/AMA = 25/70.1/0.2 | ST/2EHA/AMA = 25/70.1/0.2 | ST/2EHA/AMA = 25/70.1/0.2 | ST/2EHA/AMA = 25/70.1/0.2 | ST/2EHA/AMA = 25/70.1/0.2 |
| Particle diameter: 180 nm Tg: -32°C Degree of swelling: ×1.5 | Particle diameter: 180 nm Tg: -32°C Degree of swelling: ×1.5 | Particle diameter: 180 nm Tg: -32°C Degree of swelling: ×1.5 | Particle diameter: 180 nm Tg: -32°C Degree of swelling: ×1.5 | Particle diameter: 180 nm Tg: -32°C Degree of swelling: ×1.5 | Particle diameter: 180 nm Tg: -32°C Degree of swelling: ×1.5 |
| 15 | 15 | 15 | 15 | 15 | 15 |
| 11 | 17 | 17 | 17 | 17 | 17 |
| 0.31 | 0.48 | 0.48 | 0.48 | 0.48 | 0.48 |
| - | - | - | - | - | - |
| - | - | - | - | - | - |
| 0.25 | 0.5 | 0.12 | 0.12 | 0.12 | 0.12 |
| Alumina | Alumina | Alumina | Alumina | Alumina | Alumina |
| 2 | 2 | 2 | 2 | 2 | 2 |
| A | A | A | A | A | A |
| A | C | B | C | B | A |
| A | A | B | C | B | A |
| A | C | A | B | A | A |
| B | C | B | C | B | A |
| A | A | A | A | A | A |

EP 4 287 297 A1

[Table 2]

| | | | | Example 11 | Example 12 | Example 13 |
|---|---|---|---|---|---|---|
| Positive electrode mixed material layer | Polymer A | | Type | A1 | A1 | A1 |
| | | | Proportional content Y of acrylonitrile units [mass%] | 35 | 35 | 35 |
| | | | Proportional content of butadiene units and hydrogenated butadiene units [mass%] | 65 | 65 | 65 |
| | | | Iodine value [mg/100 mg] | 20 | 20 | 20 |
| | | | Molecular weight | 100000 | 100000 | 100000 |
| | | | Proportional content of structural units derived from butadiene polymerized by 1,2-bonding [mass%] | 9.1 | 9.1 | 9.1 |
| | | | Content [mass%] | 0.16 | 0.16 | 0.16 |
| | PVdF | | Content [mass%] | 1.2 | 1.2 | 1.2 |
| | Positive electrode active material | | Type | NMC532 | NMC532 | NMC532 |
| | | | Content [mass%] | 97.84 | 97.84 | 97.84 |
| | Conductive material | | Type | CNT | CNT | CNT |
| | | | Content [mass%] | 0.8 | 0.8 | 0.8 |
| | | | Mass per unit area [mg/cm$^2$] | 22 | 22 | 22 |
| | | | Density [g/cm$^3$] | 3.4 | 3.4 | 3.4 |
| | | | Void fraction [%] | 28 | 28 | 28 |
| | | | Separator substrate (thickness) | PE (9 $\mu$m) | PE (9 $\mu$m) | PE (9 $\mu$m) |
| | | | Ratio of coverage by polymer [%] | 50 | 6 | 15 |
| | | | Type | PVdF-HFP | B3 | B4 |
| | | | (Meth)acrylic acid ester monomer units [mass%] | | BA 20 | Core: MMA/BA = 42/24.5 |

(continued)

| | | | | | | Example 11 | Example 12 | Example 13 |
|---|---|---|---|---|---|---|---|---|
| Separator | Adhesive layer | First polymer (polymer B) | Chemical composition | Polar containing monomer units | Nitrile group-cortaining monomer units [mass%] | - | - | - |
| | | | | | Acid group-containing monomer units [mass%] | | - | Core: MAA 2.8 / Shell: MAA 0.3 |
| | | | | | Epoxy group-containing monomer units [mass%] | | GMA 20 | - |
| | | | | Other monomer units | Cross-linkable monomer units [mass%] | | EDMA 0.5 | Core: EDMA 0.7 |
| | | | | | Aromatic vinyl monomer units [mass%] | | ST 59.5 | Shell: ST 29.7 |
| | | | Physical properties | | | | Particle diameter: 5 μm, Tg: 40°C, Degree of swelling: ×2 | Particle diameter: 500 nm, Tg: 60°C/105°C, Degree of swelling: ×13 |
| | | | Amount [parts by mass] | | | 18 | 12 | 100 |

48

EP 4 287 297 A1

| | | | | | Example 11 | Example 12 | Example 13 |
|---|---|---|---|---|---|---|---|
| | | Second polymer (polymer B) | | Type | | B7 | B8 |
| | | | Chemical composition | Polar group-containing monomer units [mass%] | Cyanoethyl PVA | AN/MAA/AGE = 2/2/1.5 | AN/MAA = 19/2 |
| | | | | Other monomer units [mass%] | | BA/AMA = 94.3/0.2 | 2EEWAMA = 78.8/0.2 |
| | | | Physical properties | | Molecular weight: 60000 Cyanoethylation rate: 75% | Particle diameter: 350 nm Tg: -40°C Degree of swelling: ×3.9 | Particle diameter: 180 nm Tg: -35°C Degree of swelling: ×3.9 |
| | | | Amount [parts by mass] | | 2 | 5 | 12 |
| | | Third polymer (polymer B) | | Type | - | B9 | - |
| | | | Chemical composition [mass%] | Polar group-containing monomer units | - | AAm/HEAAm/AA | - |
| | | | | | - | = 74/16/10 | - |
| | | | Physical properties | | - | Molecular weight 290000 | - |
| | | | Amount [parts by mass] | | - | 1.5 | - |
| | | Total proportional content X of polar group-containing monomer units in polymer B of adhesive layer [mass%] | | | 0.20 | 23 | 5 |
| | | Inorganic particles Amount [parts by mass] | X/Y | | 0.006 | 0.64 | 0.14 |
| | | | Inorganic particles | | Alumina | Alumina | |
| | | | | | 80 | 100 | - |
| | Heat-resistant layer | Mass per unit area [g/m²] | | | Thickness: 4.5 μm | Thickness: 3 μm | 0.15 |
| | | Inorganic particles Thickness [μm] | | | - | - | Alumina 2 |

EP 4 287 297 A1

(continued)

| Evaluations | | Example 11 | Example 12 | Example 13 |
|---|---|---|---|---|
| Adhesiveness between electrode and separator after hot pressing | | A | B | A |
| Injectability | | C | A | C |
| Cell windability | | A | A | A |
| Cycle characteristics (25°C) | | B | A | A |
| Low-temperature rate characteristics (-10°C) | | A | A | C |
| Heat shrinkage resistance of separator in electrolyte solution | | B | A | A |

| Example 14 | Example 15 | Comparative Example 1 | Comparative Example 2 | Comparative Example 3 | Comparative Example 4 |
|---|---|---|---|---|---|
| A1 | A1 | | A1 | A1 | A1 |
| 35 | 35 | | 35 | 35 | 35 |
| 65 | 65 | | 65 | 65 | 65 |
| 20 | 20 | - | 20 | 20 | 20 |
| 100000 | 100000 | | 100000 | 100000 | 100000 |
| 9.1 | 9.1 | | 9.1 | 9.1 | 9.1 |
| 0.16 | 0.16 | 0 | 10 | 0.16 | 0.16 |
| 1.2 | 1.2 | 1.2 | 0 | 1.2 | 1.2 |
| NMC532 | NMC532 | NMC532 | NMC532 | NMC532 | NMC532 |
| 97.84 | 97.84 | 98 | 89.2 | 97.84 | 97.84 |
| CNT | CNT | CNT | CNT | CNT | CNT |
| 0.8 | 0.8 | 0.8 | 0.8 | 0.8 | 0.8 |
| 22 | 22 | 22 | 22 | 22 | 22 |
| 3.4 | 3.4 | 3.4 | 3.4 | 3.4 | 3.4 |
| 28 | 28 | 28 | 28 | 28 | 28 |
| PE (9 $\mu$m) | PE (9 $\mu$m) | PE (9 $\mu$m) | PE (9 $\mu$m) | PE (9 $\mu$m) | PE (9 $\mu$m) |
| 15 | 12 | 12 | 12 | | 95 |

(continued)

| | Example 14 | Example 15 | Comparative Example 1 | Comparative Example 2 | Comparative Example 3 | Comparative Example 4 |
|---|---|---|---|---|---|---|
| | B5 | B1 | B1 | B1 | | B1 |
| | Core: BA 24.5 | Core: MMA/BA = 28/24.5 | Core: MMA/BA = 28/24.5 | Core: MMA/BA = 28/24.5 | | Core: MMA/BA = 28/24.5 |
| | Core: AN 42 / Shell: AN 1.7 | Core: AN 14 / Shell: AN 1.7 | Core: AN 14 / Shell: AN 1.7 | Core: AN 14 / Shell: AN 1.7 | | Core: AN 14 / Shell AN 1.7 |
| | Core: MAA 2.8 / Shell: MAA 0.3 | Core: MAA 2.8 / Shell: MAA 0.3 | Core: MAA 2.8 / Shell: MAA 0.3 | Core: MAA 2.8 / Shell: MAA 0.3 | | Core: MAA 2.8 / Shell: MAA 0.3 |
| | - | - | - | - | | - |
| | Core: EDMA 0.7 | Core: EDMA 0.7 | Core: EDMA 0.7 | Core: EDMA 0.7 | | Core: EDMA 0.7 |
| | Shell: ST 28 | Shell ST 28 | Shell ST 28 | Shell ST 28 | | Shell ST 28 |
| | Particle diameter: 500 nm / Tg: 65°C/105°C / Degree of swelling: ×12 | Particle diameter: 500 nm / Tg: 65°C/105°C / Degree of swelling: ×12 | Particle diameter:500 nm / Tg: 65°C/105°C / Degree of swelling: ×12 | Particle diameter:500 nm / Tg: 65°C/105°C / Degree of swelling: ×12 | No adhesive layer | Particle diameter: 500 nm / Tg: 65°C/105°C / Degree of swelling: ×12 |
| | 100 | 100 | 100 | 100 | | 100 |
| | B6 | B6 | B6 | B6 | | B6 |
| | AGE/AA = 1.7/3 | AGE/AA = 1.7/3 | AGE/AA = 1.7/3 | AGE/AA = 1.7/3 | | AGE/AA = 1.7/3 |

(continued)

| Example 14 | Example 15 | Comparative Example 1 | Comparative Example 2 | Comparative Example 3 | Comparative Example 4 |
|---|---|---|---|---|---|
| ST/2EHA/AMA = 25/70.1/0.2 | ST/2EHA/AMA = 25/70.1/0.2 | ST/2EHA/AMA = 25/70.1/0.2 | ST/2EHA/AMA = 25/70.1/0.2 | | ST/2EHA/AMA = 25/70.1/0.2 |
| Particle diameter: 180 nm Tg: -32°C Degree of swelling: ×1.5 | Particle diameter: 180 nm Tg: -32°C Degree of swelling: ×1.5 | Particle diameter: 180 nm Tg: -32°C Degree of swelling: ×1.5 | Particle diameter: 180 nm Tg: -32°C Degree of swelling: ×1.5 | | Particle diameter: 180 nm Tg: -32°C Degree of swelling: ×1.5 |
| 15 | 15 | 15 | 15 | | 15 |
| - | - | - | - | | - |
| - | - | - | - | | - |
| - | - | - | - | | - |
| - | - | - | - | | - |
| 41 | 17 | 17 | 17 | | 17 |
| 1.18 | 0.48 | 0.48 | 0.48 | | 0.48 |
| - | - | - | - | | - |
| - | - | - | - | | - |
| 0.15 | 0.12 | 0.12 | 0.12 | | 0.96 |
| Alumina | - | Alumina | Alumina | Alumina | Alumina |
| 2 | | 2 | 2 | 2 | 2 |
| A | A | C | A | D | A |
| C | B | D | D | B | D |
| A | A | D | C | A | C |
| C | B | C | D | D | D |

(continued)

| Example 14 | Example 15 | Comparative Example 1 | Comparative Example 2 | Comparative Example 3 | Comparative Example 4 |
|---|---|---|---|---|---|
| A | A | D | D | A | D |
| A | B | C | A | D | A |

It can be seen from Tables 1 and 2 that electrolyte solution mobility and separator heat shrinkage resistance of a non-aqueous secondary battery are excellent in a case in which, as in Examples 1 to 15, the non-aqueous secondary battery includes a positive electrode, a negative electrode, an electrolyte solution, and a separator, the positive electrode includes a positive electrode mixed material layer containing a positive electrode active material, a conductive material, and a polymer A, the polymer A is either or both of a polymer including a (meth)acrylonitrile monomer unit and a conjugated diene monomer unit or a hydrogenated product thereof, the content of the polymer A in the positive electrode mixed material layer is within a specific range, and the separator includes an adhesive layer that contains a polymer B and has a ratio of coverage by the polymer B that is within a specific range.

In contrast, it can be seen that electrolyte solution mobility of a non-aqueous secondary battery is poor in Comparative Example 1 in which a positive electrode mixed material layer that does not contain the specific polymer A described above is used.

It can also be seen that electrolyte solution mobility of a non-aqueous secondary battery is also poor in Comparative Example 2 in which the content of the polymer A in the positive electrode mixed material layer exceeds a specific range.

Moreover, it can be seen that separator heat shrinkage resistance of a non-aqueous secondary battery is poor in Comparative Example 3 in which a separator that does not include the specific adhesive layer described above is used.

Furthermore, it can be seen that electrolyte solution mobility of a non-aqueous secondary battery is poor in Comparative Example 4 in which the separator includes an adhesive layer containing a polymer B, but in which the ratio of coverage of the adhesive layer by the polymer B exceeds a specific range.

INDUSTRIAL APPLICABILITY

According to the present disclosure, it is possible to provide a non-aqueous secondary battery having excellent electrolyte solution mobility and separator heat shrinkage resistance.

Claims

1. A non-aqueous secondary battery comprising a positive electrode, a negative electrode, an electrolyte solution, and a separator, wherein

the positive electrode includes a current collector and a positive electrode mixed material layer formed on the current collector,
the positive electrode mixed material layer contains a positive electrode active material, a conductive material, and a polymer A,
the polymer A includes a nitrile group-containing monomer unit and either or both of a conjugated diene monomer unit and an alkylene structural unit,
content of the polymer A in the positive electrode mixed material layer is not less than 0.01 mass% and not more than 8 mass%,
the separator includes a separator substrate and an adhesive layer formed on the separator substrate,
the adhesive layer contains a polymer B, and
the adhesive layer has a ratio of coverage by the polymer B of not less than 3% and not more than 70%.

2. The non-aqueous secondary battery according to claim 1, wherein proportional content of the nitrile group-containing monomer unit in the polymer A is not less than 10 mass% and not more than 50 mass%.

3. The non-aqueous secondary battery according to claim 1 or 2, wherein the positive electrode mixed material layer has a void fraction of not less than 15% and not more than 50%.

4. The non-aqueous secondary battery according to any one of claims 1 to 3, wherein the polymer B includes not less than 0.1 mass% and not more than 50 mass%, in total, of one or more polar group-containing monomer units selected from the group consisting of an acid group-containing monomer unit, a hydroxyl group-containing monomer unit, an epoxy group-containing monomer unit, an amide group-containing monomer unit, and a nitrile group-containing monomer unit.

5. The non-aqueous secondary battery according to claim 4, wherein, when total proportional content of the polar group-containing monomer units in the polymer B is denoted as X and proportional content of the nitrile group-containing monomer unit in the polymer A is denoted as Y, a ratio X/Y of X and Y is not less than 0.05 and not more than 1.2.

6. The non-aqueous secondary battery according to any one of claims 1 to 5, wherein the polymer B includes not less than 5 mass% and not more than 80 mass% of a (meth)acrylic acid ester monomer unit.

7. The non-aqueous secondary battery according to any one of claims 1 to 6, wherein the polymer B includes a polymer that includes a fluorine-containing monomer unit.

8. The non-aqueous secondary battery according to any one of claims 1 to 7, wherein total proportional content of a structural unit derived from a conjugated diene monomer polymerized by 1,2-bonding and a structural unit derived from a conjugated diene monomer polymerized by 3,4-bonding in the polymer A is 30 mass% or less.

9. The non-aqueous secondary battery according to any one of claims 1 to 8, wherein the positive electrode mixed material layer and the adhesive layer are in contact.

<div align="center">

**INTERNATIONAL SEARCH REPORT**

</div>

| | International application No. |
|---|---|
| | **PCT/JP2022/003135** |

**A. CLASSIFICATION OF SUBJECT MATTER**

*H01M 4/13*(2010.01)i; *H01M 4/62*(2006.01)i; *H01M 10/05*(2010.01)i; *H01M 50/42*(2021.01)i; *H01M 50/449*(2021.01)i; *H01M 50/46*(2021.01)i

FI: H01M10/05; H01M4/13; H01M4/62 Z; H01M50/42; H01M50/449; H01M50/46

According to International Patent Classification (IPC) or to both national classification and IPC

**B. FIELDS SEARCHED**

Minimum documentation searched (classification system followed by classification symbols)

H01M4/13; H01M4/62; H01M10/05; H01M50/42; H01M50/449; H01M50/46

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2015-88253 A (NIPPON ZEON CO) 07 May 2015 (2015-05-07) claims, paragraphs [0030]-[0105], [0162]-[0163], [0180]-[0181] | 1-9 |
| Y | JP 2015-156395 A (SUMITOMO CHEMICAL CO) 27 August 2015 (2015-08-27) paragraphs [0034]-[0035] | 1-9 |
| Y | WO 2014/119790 A1 (NIPPON ZEON CO) 07 August 2014 (2014-08-07) paragraphs [0036]-[0119], [0148] | 1-9 |
| A | JP 2016-522553 A (LG CHEMICAL LTD) 28 July 2016 (2016-07-28) | 1-9 |

☐ Further documents are listed in the continuation of Box C.  ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **03 March 2022** | **15 March 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

EP 4 287 297 A1

**INTERNATIONAL SEARCH REPORT**
Information on patent family members

International application No.

**PCT/JP2022/003135**

| Patent document cited in search report | | | Publication date (day/month/year) | Patent family member(s) | | | Publication date (day/month/year) |
|---|---|---|---|---|---|---|---|
| JP | 2015-88253 | A | 07 May 2015 | (Family: none) | | | |
| JP | 2015-156395 | A | 27 August 2015 | US<br>paragraphs [0082]-[0084]<br>WO<br>CN<br>KR | 2015/0171393<br><br>2014/014118<br>104508898<br>10-2015-0032895 | A1<br><br>A1<br>A<br>A | |
| WO | 2014/119790 | A1 | 07 August 2014 | US<br>paragraphs [0050]-[0137],<br>[0176]<br>EP<br>CN<br>KR | 2015/0357648<br><br><br>2953193<br>104904042<br>10-2015-0114463 | A1<br><br><br>A1<br>A<br>A | |
| JP | 2016-522553 | A | 28 July 2016 | US<br>WO<br>EP<br>KR<br>CN | 2015/0263324<br>2015/047034<br>2894694<br>10-2015-0037643<br>105556702 | A1<br>A1<br>A1<br>A<br>A | |

Form PCT/ISA/210 (patent family annex) (January 2015)

57

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019131348 A1
- WO 2017094252 A1
- JP 2013179040 A
- JP 2018174150 A
- JP 2013145763 A